# EUROPÄISCHE PATENTSCHRIFT

(11) **EP 3 577 594 B1**
(45) Veröffentlichungstag und Bekanntmachung des Hinweises auf die Patenterteilung: **09.08.2023**
(21) Anmeldenummer: 18711812.0
(22) Anmeldetag: 31.01.2018
(51) Int. Cl.: G06K 7/08, G06K 19/067, G06K 19/077

(54) **SYSTEM UND VERFAHREN ZUR ERZEUGUNG EINES VERÄNDERBAREN ZEITABHÄNGIGEN SIGNALS AUF EINEM KAPAZITIVEN FLÄCHENSENSOR**
DEVICE AND USE OF THE DEVICE FOR GENERATING A VARIABLE TIME-DEPENDENT SIGNAL ON A CAPACITIVE SURFACE SENSOR
DISPOSITIF ET UTILISATION DU DISPOSITIF DE GÉNÉRATION D'UN SIGNAL VARIABLE DÉPENDANT DU TEMPS DANS UN CAPTEUR CAPACITIF DE SUPERFICIE

(30) Priorität: 31.01.2017 EP 17000166; 05.09.2017 EP 17001505
(43) Veröffentlichungstag der Anmeldung: 11.12.2019
(73) Patentinhaber: Prismade Labs GmbH, 09116 Chemnitz (DE)
(72) Erfinder: WEIGELT, Karin, 09116 Chemnitz (DE); THIELE, Jan, 09116 Chemnitz (DE)
(74) Vertreter: Hertin und Partner Rechts- und Patentanwälte PartG mbB
(86) Internationale Anmeldenummer: PCT/EP2018/000043
(87) Internationale Veröffentlichungsnummer: WO 2018/141477

(56) Entgegenhaltungen:
- EP-A1- 2 088 532
- EP-A1- 3 002 713
- DE-A1- 1 690 334
- DE-A1- 2 612 653
- US-A- 5 818 019
- US-A1- 2013 284 578
- US-A1- 2015 286 294
- US-A1- 2015 356 326

## Beschreibung

Die Erfindung betrifft ein System und ein Verfahren zur Erzeugung eines zeitabhängigen Signals auf einem kapazitiven Flächensensor.

Die Erfindung ist auf dem technischen Gebiet der Autoidentifikationstechnologien angesiedelt. Bekannte Technologien zur automatischen gerätebasierten Identifikation von Objekten und/oder Dokumenten sind zum Beispiel optische Codes oder RFID-Tags (Radiofrequenzidentifikation). Optische Codes sind in Form von klassischen Strichcodes (Barcodes) oder auch 2D-Barcodes, zum Beispiel DataMatrix- oder QR-Code, bekannt. Im Dokumentenbereich werden zur Identifikation auch häufig sogenannte OCR-Verfahren (optical character recognition), die auch als Texterkennung oder optischen Zeichenerkennung bezeichnet werden, eingesetzt. Der Nachteil von optischen Codes und Verfahren ist vor allem die einfache Kopierbarkeit und geringe Manipulationssicherheit, so dass entsprechend gekennzeichnete Objekte und/oder Dokumente nicht gegenüber Fälschungsversuchen geschützt sind.

RFID-Tags sind elektronische Schaltkreise, die mittels Funkwellen ausgelesen werden. Diese Tags sind wesentlich kopiersicherer und fälschungssicherer im Vergleich zu optischen Codes. Für viele Massenanwendungen sind RFID-Tags jedoch zu teuer, insbesondere weil häufig eine Anwendung in hohen Stückzahlen erforderlich ist. Zudem sind RFID-Tags für Endkunden-Anwendungen nicht geeignet, da spezielle Lesegeräte benötigt werden. Im Bereich von Dokumenten stört zudem die Dicke des RFID-Chips, insbesondere wenn große Mengen von Dokumenten gekennzeichnet und gelagert werden müssen.

Als weitere alternative Autoidentifikationstechnologie wurden in den letzten Jahren kapazitive Datenträger entwickelt, die die Vorteile der geringen Kosten und der verbesserten Fälschungssicherheit kombinieren. Aus dem Stand der Technik sind kapazitive Datenträger in unterschiedlichen Ausprägungen bekannt, sowie Verfahren zu deren Herstellung und Verfahren und Systeme zur Identifikation der Datenträger, unter anderem mittels Berührungsbildschirmen, die zum Beispiel in aktuellen Smartphones und Tablets zum Einsatz kommen. Diese kapazitiven Datenträger sind kopiersicher, kostengünstiger als optische Codes und können praktisch von jedermann mit Hilfe eines mobilen Endgerätes, zum Beispiel eines Smartphones oder Tablets, gelesen werden.

Im Stand der Technik sind kapazitive Datenträger bekannt, die eine elektrisch leitfähige Struktur umfassen, die auf eine spezielle Anordnung der Elemente der leitfähigen Struktur beschränkt sind oder die nach bestimmten Regeln strukturiert sein müssen, um von einem Lesegerät, zum Beispiel einem kapazitiven Flächensensor, erkannt und/oder ausgelesen zu werden. Die elektrisch leitfähigen Strukturen der Datenträger sind festgelegt und können nachträglich nicht geändert oder angepasst werden. Insbesondere können diese elektrisch leitfähigen Strukturen üblicherweise genau ein bestimmtes Signal auf dem Lesegerät beziehungsweise Flächensensor auslösen, da die elektrisch leitfähige Struktur in Bezug auf ihre räumliche Gestalt unveränderbar ist und daher vom Lesegerät stets als dieselbe Struktur erkannt wird.

In WO 2011/154524 A1 wird ein System mit kapazitivem Informationsträger zur Erfassung von Informationen offenbart. Die Erfindung beschreibt ein System, umfassend einen kapazitiven Informationsträger, bei dem auf einem elektrisch nicht-leitfähigen Substrat eine elektrisch leitfähige Schicht angeordnet ist und einen Flächensensor, wobei der Informationsträger mit dem Flächensensor in Kontakt gebracht vorliegt. Die elektrisch leitfähige Schicht umfasst eine Touch-Struktur, die einen Touch-Punkt, eine Koppelfläche und eine Leiterbahn umfasst. Eine solche Struktur kann mit einem mit dem Flächensensor verbundenen Datenverarbeitungssystem ausgewertet und softwaretechnisch verarbeitet werden. Die resultierenden Touch-Eingaben auf dem Flächensensor erzeugen ein statisches Bild von mehreren Touch-Punkten, welches vom Datenverarbeitungssystem ausgewertet werden kann. Eine nachträgliche Veränderung des Datenträgers ist nicht vorgesehen.

In WO 2014/064288 A1 bzw. US 2015/0286294 A1 ist eine modular aufgebaute Spielfigur zur Identifizierung durch Berührungsbildschirme beschrieben, die mindestens zwei Module umfasst, wobei das zweite Modul ein Identifikationsmittel ist, das mindestens eine elektrisch leitfähige Schicht umfasst. Diese Erfindung ermöglicht den Austausch des Identifikationsmittels. Auch in diesem Fall wird ein statisches Bild von Touch-Punkten ausgewertet. In einer Ausführungsform wird beispielsweise einen Würfel vorgeschlagen, auf welchem eine elektrisch leitfähige Struktur aufgebracht ist, welche mittels Leiterbahnen verbundene Datenpunkte gekennzeichnet ist. Beim Auflegen der elektrisch leitfähigen Struktur auf einem Touchpad, wird an der Stelle der Datenpunkte eine Toucheingabe aufgezeichnet. Für die Datenpunkte sind d Größe von bevorzugt 6 - 10 mm erforderlich, da diese besonders gut Fingerkuppen imitieren. Die Anzahl möglicher Kodierungen wird durch die Designeinschränkung begrenzt. Weiterhin kann der Status des Identifikators selbst kann auf einfache Weise nicht verändert werden. Diese Ausführungsform ist auf im Wesentlichen dreidimensionale Objekte beschränkt und nicht für Dokumente geeignet.

Die DE 1690334 A1 und die DE 2612653 offenbaren eine elektrische Leiterplatte.

Darüber hinaus sind im Stand der Technik Verfahren und Systeme zur kapazitiven Identifizierung eines Behälters, der mit einer elektrisch leitfähigen Flüssigkeit gefüllt ist, bekannt. Auch diese Verfahren oder Systeme, die beispielsweise in der WO 2014/101912 A1 offenbart werden, sind auf die Verwendung im Zusammenhang mit im Wesentlichen dreidimensionalen Objekte beschränkt und insbesondere nicht für Dokumente geeignet. In US 5818019 A ist eine Vorrichtung zur Verifizierung von Lotterielosen beschrieben, bei der unter anderem elektrisch leitfähige Bereiche auf ein Lotterielos gedruckt werden und die Anwesenheit dieser Elemente mit Hilfe eines speziellen Lesegerätes detektiert wird. Der einzelne leitfähige Bereich dient zur Erkennung von Manipulationsversuchen. Es handelt sich hierbei nicht um einen kapazitivem Datenträger im Sinne eines Informationsspeichers, wie in der vorliegenden Erfindung. Im elektrisch leitfähigen Bereich sind keine Daten gespeichert.

Für viele Anwendungen ist es wünschenswert, einen kapazitiven Datenträger bereitzustellen, der sich mittels Flächensensoren, die zum Beispiel in modernen Smartphones oder Tablets integriert sind, detektieren lässt und der die oben bereits genannten Vorteile gegenüber optischen und funkbasierten Systemen (Kopiersicherheit, Manipulationssicherheit, geringe Kosten) aufweist und sich nachträglich verändern bzw. beschreiben lässt oder welchem nachträglich ein neuer Status zugeordnet werden kann.

Um die Einsatzmöglichkeiten für Systeme aus Datenträgern mit elektrisch leitfähigen Strukturen und Flächensensoren zu vergrößern und ihren Einsatz flexibler zu gestalten, ist es Aufgabe der vorliegenden Erfindung, ein System und ein Verfahren bereitzustellen, mit denen verschiedene Signale auf einem Lesegerät hervorgerufen werden können, ohne einen anderen Datenträger mit einer anderen elektrisch leitfähigen Struktur zu verwenden. Aufgabe der Erfindung ist es insbesondere, einen kapazitiven Datenträger und die elektrisch leitfähige Struktur auf dem Datenträger als Bestandteil eines Systems so zu gestalten, dass auf dem Datenträger nachträglich Zusatzinformationen aufgebracht werden können oder dass der Datenträger nachträglich mit neuen Statusinformationen versehen werden kann, die mittels eines Flächensensors ausgelesen werden können. Insbesondere im Umgang mit Dokumenten gibt es Bedarf, werthaltige Dokumente mittels digitaler Datenträger zu schützen und nachträglich den Inhalt des Datenträgers manuell zu bearbeiten oder zu verändern, was ein weiteres Anliegen der Erfindung darstellt.

### Beschreibung der Erfindung:

Gelöst wird die Aufgabe durch die Merkmale der unabhängigen Ansprüche.

Vorteilhafte Ausgestaltungen der Erfindung sind in den abhängigen Ansprüchen beschrieben.

Es war vollkommen überraschend, dass ein System bereitgestellt werden kann, das insbesondere in Verbindung mit Dokumenten eingesetzt werden kann, um eine nachträgliche Bearbeitung und/oder Veränderung der Dokumente zu erreichen, wobei diese bevorzugt manuellen oder handschriftlichen Veränderungen durch einen Flächensensor erstaunlich sicher erkannt wird. Es ist im Sinne der Erfindung bevorzugt, dass die zweite elektrisch leitfähige Struktur durch eine Bearbeitung der ersten elektrisch leitfähigen Struktur erhalten wird. Es ist in einer Ausführungsform der Erfindung bevorzugt, dass die Veränderung der ersten elektrisch leitfähigen Struktur bewirkbar ist durch eine oder mehrere der folgenden Maßnahmen:
a) Auftragen von elektrisch leitfähigem Material,
b) selektives Entfernen eines Teils der ersten elektrisch leitfähigen Struktur,
c) Auftragen eines Materials, das dazu eingerichtet ist, Eigenschaften, insbesondere die elektrische Leitfähigkeit, der ersten elektrisch leitfähigen Struktur zu verändern.

Es ist im Sinne der Erfindung besonders bevorzugt, dass die erste elektrisch leitfähige Struktur bevorzugt auch als elektrisch leitfähige Grundstruktur bezeichnet wird und die zweite elektrisch leitfähige Struktur als resultierende elektrisch leitfähige Struktur. Beide Strukturen zusammen werden im Sinne der Erfindung bevorzugt als "elektrisch leitfähige Strukturen" bezeichnet, wobei dieser Begriff bevorzugt den Oberbegriff für die erste und die zweite elektrisch leitfähige Struktur bildet und damit vorzugsweise entweder beide Strukturen oder eine der beiden Strukturen gemeint sein kann.

Der durchschnittliche Fachmann weiß, dass die beiden elektrisch leitfähigen Strukturen nicht gleichzeitig auf der Vorrichtung vorliegen, sondern dass die Vorrichtung zunächst, beispielsweise zu einem ersten Zeitpunkt, eine erste elektrisch leitfähige Struktur umfasst. Anschließend erfolgt eine Veränderung der ersten leitfähigen Struktur, wobei durch die Veränderung der ersten leitfähigen Struktur die zweite elektrisch leitfähige Struktur erhalten wird. Diese liegt beispielsweise zu einem späteren Zeitpunkt auf der Vorrichtung des vorgeschlagenen Systems vor. Die Eigenschaft, dass die erste elektrisch leitfähige Struktur und die zweite elektrisch leitfähige Struktur bevorzugt nicht gleichzeitig auf der Vorrichtung vorliegen, sondern vorzugsweise nacheinander, wird im Sinne der Erfindung vorzugsweise mit der Formulierung, dass "die Vorrichtung eine erste elektrisch leitfähige Struktur und eine zweite elektrisch leitfähige Struktur umfasst" beschrieben.

Die dynamische Eingabe erfolgt mittels eines Eingabemittels auf der Vorrichtung. Vorzugsweise stellt die dynamische Eingabe eine Bewegung, also einen dynamischen Vorgang, eines Eingabemittels auf einer elektrisch leitfähigen Struktur dar, wobei die elektrisch leitfähige Struktur auf einer Vorrichtung angeordnet vorliegt. Die dynamische Eingabe stellt vorzugsweise eine Relativbewegung dar zwischen der Vorrichtung und einem Eingabemittel, insbesondere zwischen einer elektrisch leitfähigen Struktur der Vorrichtung und dem Eingabemittel. Mit anderen Worten ist es im Sinne der Erfindung bevorzugt, dass die dynamische Eingabe mit einem Eingabemittel auf der ersten elektrisch leitfähigen Struktur und/oder der zweiten elektrisch leitfähigen Struktur erfolgt. Vorzugsweise kann es sich bei dem Eingabemittel um einen menschlichen Finger, das heißt dem Finger eines menschlichen Nutzers der Vorrichtung, handeln oder einen Eingabestift zur Verwendung in Verbindung mit Smartphones oder dergleichen, wie sie aus dem Stand der Technik bekannt sind. Anders als im Stand der Technik, der offenbart, dass eine Relativbewegung zwischen einer Vorrichtung und einer Lesevorrichtung erfolgt, erfolgt im Rahmen der vorliegenden Erfindung eine dynamische Eingabe in dem Sinne, dass ein Eingabemittel auf der Vorrichtung, beziehungsweise der elektrisch leitfähigen Struktur der Vorrichtung bewegt wird, vorzugsweise relativ zueinander. Es ist ganz besonders bevorzugt, dass das zeitlich veränderbare Signal durch die dynamische Eingabe erzeugt wird, das heißt insbesondere durch die Relativbewegung zwischen Vorrichtung und Eingabemittel.

Es ist im Sinne der Erfindung ganz besonders bevorzugt, dass die dynamische Eingabe moduliert wird. Das bedeutet im Sinne der Erfindung, dass die Bewegung, die das Eingabemittel auf der Vorrichtung vollführt, von dem Flächensensor in einer abweichenden Form erkannt werden kann. Die Abweichung wird dabei vorzugsweise von der Form und/oder Gestalt der elektrisch leitfähigen Struktur hervorgerufen, die bevorzugt dazu eingerichtet ist, die dynamische Eingabe zu modulieren. Dieser Vorgang wird im Sinne der Erfindung bevorzugt als "Modulation einer dynamischen Eingabe" bezeichnet. Es ist im Sinne der Erfindung ferner bevorzugt, dass das Signal im kapazitiven Flächensensor erzeugt wird, wobei im Sinne der Erfindung das Signal vorzugsweise durch die Vorrichtung und insbesondere durch die elektrisch leitfähige Struktur auf der Vorrichtung auf dem kapazitiven Flächensensor festgelegt und/oder determiniert wird. Es ist im Sinne der Erfindung ganz besonders bevorzugt, dass das veränderbare zeitabhängige Signal auf dem kapazitiven Flächensensor durch die erste elektrisch leitfähige Struktur und/oder die zweite elektrisch leitfähige Struktur festgelegt wird.

Der Flächensensor kann beispielsweise Teil eines Berührungsbildschirms sein, wie er beispielsweise bei neueren Mobiltelefonen ab 2007 oder bei Tablet-PCs verwendet wird. Es kann für einzelne Anwendungen aber auch bevorzugt sein, dass der Flächensensor beispielsweise Bestandteil eines festinstallierten Datenverarbeitungssystems ist, beispielsweise eines Informationssystems an einem touristisch interessanten Ort. Es kann ferner bevorzugt sein, dass der Flächensensor Bestandteil eines speziellen Lesegeräts ist, das beispielsweise auf die Vorrichtung abgestimmt sein kann. Der Flächensensor ist vorzugsweise dazu eingerichtet, elektrische Signale zu erkennen, die beispielsweise dann entstehen, wenn eine elektrisch leitfähige Struktur mit einem Flächensensor in einem Wirkkontakt steht und ein Nutzer eine dynamische Eingabe mit Hilfe eines Eingabemittels auf der elektrisch leitfähigen Struktur, die bevorzugt auf der Vorrichtung angeordnet vorliegt, vornimmt. Es ist im Sinne der Erfindung insbesondere bevorzugt, dass die erste elektrisch leitfähige Struktur oder die zweite elektrisch leitfähige Struktur mit dem kapazitiven Flächensensor mindestens teilweise in einem Wirkkontakt steht. Diese dynamische Eingabe kann zum Beispiel von einer Bewegung des Nutzers auf der Vorrichtung erfolgen, wodurch die elektrisch leitfähige Struktur ganz oder teilweise berührt wird. Es ist im Sinne der Erfindung insbesondere bevorzugt, eine Relativbewegung zwischen einem Eingabemittel und der Vorrichtung als dynamische Eingabe zu bezeichnen, wobei als Eingabemittel beispielsweise ein Körperteil eines Nutzers oder ein speziell dafür vorgesehener Stift verwendet werden kann. Die Bewegung stellt beispielsweise eine Geste, zum Beispiel eine Wischgeste, dar.

In einer bevorzugten Ausführungsformerfolgt die Verwendung eines Stiftes zur Veränderung einer ersten elektrisch leitfähigen Struktur auf einer Vorrichtung, so dass eine zweite elektrisch leitfähige Struktur entsteht. Es ist im Sinne der Erfindung bevorzugt, dass es sich bei der Vorrichtung, auf der eine zu verändernde erste elektrisch leitfähige Struktur vorliegt, um eine Vorrichtung handelt, die bevorzugt dadurch gekennzeichnet, dass die erste elektrisch leitfähige Struktur dazu eingerichtet ist, ein erstes Signal auf dem kapazitiven Flächensensor festzulegen, und die zweite elektrisch leitfähige Struktur dazu eingerichtet ist, ein zweites Signal auf dem kapazitiven Flächensensor zu festzulegen, wobei die zweite elektrisch leitfähige Struktur durch eine Veränderung der ersten elektrisch leitfähigen Struktur erzeugbar ist. Es ist im Sinne der Erfindung bevorzugt, dass die erste und die zweite elektrisch leitfähige Struktur bevorzugt nacheinander und nicht gleichzeitig auf der Vorrichtung vorliegen.

Es ist im Sinne der Erfindung bevorzugt, dass es sich bei dem Stift nicht um den Eingabestift handelt, der beispielsweise als Eingabemittel verwendet werden kann. Bei dem Stift handelt es sich im Sinne der Erfindung bevorzugt um einen Stift, mit dem beispielsweise elektrisch leitfähiges Material auf die Vorrichtung aufgebracht werden kann. Das kann vorzugsweise dadurch geschehen, dass mit dem Stift auf der Vorrichtung gemalt, gezeichnet und/oder geschrieben wird, wobei die Farbe und/oder Tinte die durch diesen Vorgang auf die Vorrichtung übertragen wird, beispielsweise elektrisch leitfähige Tinte und/oder Farbe darstellt. Beispielsweise kann die elektrisch leitfähige Tinte und/oder Farbe, die vorzugsweise in dem Stift enthalten ist, elektrisch leitfähige Partikel enthalten, wodurch vorteilhafterweise eine elektrische Leitfähigkeit der Tinte und/oder Farbe erreicht wird. Es kann im Sinne der Erfindung auch bevorzugt sein, dass der Stift dazu eingerichtet ist, einen Teil der ersten elektrisch leitfähigen Struktur von der Vorrichtung zu entfernen. Dies kann beispielsweise dadurch passieren, dass der Stift Mittel zum Radieren von elektrisch leitfähigem Material umfasst, wobei der Begriff "Radieren" im Sinne der Erfindung vorzugsweise als ein Abtragen oder "Wegradieren" zu verstehen ist. Es kann im Sinne der Erfindung auch bevorzugt sein, dass der Stift eine Funktion ähnlich einem "Tinten-Killer", mit der die auf der Vorrichtung vorhandene elektrisch leitfähige Struktur entfernt oder unsichtbar gemacht werden kann. Der Begriff "unsichtbar" bedeutet im Sinne der Erfindung, dass "unsichtbare" Bereiche einer elektrisch leitfähigen Struktur insbesondere für einen kapazitiven Flächensensor nicht erkennbar sind, beispielsweise indem die elektrische Leitfähigkeit der Struktur derart herabgesetzt wurde oder die elektrisch leitfähige Struktur teilweise entfernt wurde, so dass die dynamische Eingabe mit einem Eingabemittel nicht mehr oder auf eine andere Art und Weise moduliert und auf den Flächensensor übertragen wird.

Es kann im Sinne der Erfindung bevorzugt sein, dass die elektrisch leitfähige Struktur auf der Vorrichtung des vorgeschlagenen Systems Einzelelemente umfasst und dass durch die dynamische Eingabe zu unterschiedlichen Zeitpunkten tᵢ unterschiedliche Einzelelemente berührt werden, beispielsweise dadurch, dass die dynamische Eingabe von einer Wisch- oder linienförmigen Bewegung des Eingabemittels vorgenommen wird, mit der der Nutzer über die Vorrichtung, das heißt insbesondere die elektrisch leitfähige Struktur hinwegstreicht. Diese Bewegung kann vorzugsweise als Geste bezeichnet werden. Zeitpunkte, die sich auf die dynamische Eingabe durch ein Eingabemittel beziehen, werden im Folgenden vorzugsweise mit tᵢ, das heißt t₁, t₂, t₃, usw. bezeichnet.

Die Vorrichtung des vorgeschlagenen Systems kann beispielsweise von einer Karte gebildet werden. Beispielsweise kann die Karte aus einem elektrisch nicht leitfähigen Substratmaterial wie beispielsweise Kunststoff, Karton und/oder Papier bestehen und die elektrisch leitfähige Struktur aufweisen. Es ist im Sinne der Erfindung bevorzugt, dass die erste elektrisch leitfähige Struktur und/oder die zweite elektrisch leitfähige Struktur auf einem elektrisch nicht leitfähigen Substrat vorliegt. Insbesondere besteht die Vorrichtung vorzugsweise nicht aus folienartig bereitgestellten Objekten, die vollflächig Metall umfassen oder aus Metall gebildet sind, wie zum Beispiel Aluminiumfolie. Die Karte kann beispielsweise die Form und Abmessungen einer Geldkarte oder einer anderen Chipkarte aufweisen. Die elektrisch leitfähige Struktur kann vorzugsweise auch auf einer Verpackung angeordnet vorliegen, wobei die Verpackung beispielsweise in einer zusammengelegten Form (zusammengefaltete Pappschachtel) oder in einer 3D-Form (Verpackung gefüllt mit einem Produkt) vorliegen. Die Karte kann auch in Form eines Aufklebers, Stickers oder Labels vorliegen und einzeln oder auf einem Dokument oder Objekt appliziert sein. Es ist im Sinne der Erfindung bevorzugt, dass die Formulierung "elektrisch leitfähige Struktur" als Oberbegriff für die elektrisch leitfähige Grundstruktur und die zweite elektrisch leitfähige Struktur verwendet wird, insbesondere wenn die generelle Gestalt und Ausführung der elektrisch leitfähigen Struktur beschrieben wird, die sowohl für die Grundstruktur als auch für die zweite elektrisch leitfähige Struktur gilt. Die elektrisch leitfähige Grundstruktur wird vorzugsweise auch als Grundstruktur oder erste elektrisch leitfähige Struktur bezeichnet. Die zweite elektrisch leitfähige Struktur wird vorzugsweise auch als resultierende elektrisch leitfähige Struktur bezeichnet. Sie wird durch eine nachträgliche Veränderung aus der elektrisch leitfähigen Grundstruktur erzeugt.

Es ist im Sinne der Erfindung bevorzugt, dass die Vorrichtung des vorgeschlagenen Systems eine erste elektrisch leitfähige Struktur aufweist, die verändert und/oder bearbeitet werden kann, wodurch vorzugsweise eine zweite elektrisch leitfähige Struktur erhalten wird, die sich vorzugsweise von der ersten elektrisch leitfähigen Struktur unterscheidet. Es ist im Sinne der Erfindung insbesondere bevorzugt, dass die Veränderung der ersten elektrisch leitfähigen Struktur mit einem Stift bewirkbar ist. Vorzugsweise ist der Stift dazu eingerichtet, elektrisch leitfähiges Material auf die Vorrichtung aufzutragen und/oder einen Teil der ersten elektrisch leitfähigen Struktur von der Vorrichtung zu entfernen, wobei dieses Entfernen vorzugsweise selektiv erfolgt, das heißt insbesondere nicht willkürlich. Vorzugsweise kann die Veränderung der ersten elektrisch leitfähigen Struktur durch ein teilweises selektives Entfernen bewirkt werden.

Es ist im Sinne der Erfindung bevorzugt, dass eine Individualisierung der Vorrichtung des vorgeschlagenen Systems durch eine oder mehrere der folgenden Maßnahmen bewirkbar ist:
a) Auftragen von elektrisch leitfähigem Material mit einem Stift mit elektrisch leitfähiger Tinte,
b) Bedrucken mit elektrisch leitfähigem Material im Inkjetdruckverfahren,
c) Selektives Entfernen eines Teils der ersten elektrisch leitfähigen Struktur,
d) Auftragen eines Materials, das dazu eingerichtet ist, Eigenschaften, insbesondere die elektrische Leitfähigkeit, der ersten elektrisch leitfähigen Struktur zu verändern.

Das bedeutet im Sinne der Erfindung bevorzugt, dass die Vorrichtung des vorgeschlagenen Systems und/oder die elektrisch leitfähige Struktur auf der Vorrichtung individuell kenntlich gemacht werden kann in dem Sinne, dass zwei verschiedene Vorrichtungen voneinander unterschieden werden können. Vorzugsweise wird das elektrisch leitfähige Material von elektrisch leitfähiger Tinte gebildet. In einem Ausführungsbeispiel der Erfindung können beispielsweise zwei Vorrichtungen, die im Wesentlichen gleiche erste elektrisch leitfähige Strukturen aufweisen, mit einem Stift so verändert werden, dass die beiden Vorrichtungen, wenn die Vorrichtungen in einen Wirkkontakt mit dem Flächensensor gebracht werden und auf der Vorrichtung eine dynamische Eingabe mit dem Eingabemittel erfolgt, vom Flächensensor als unterschiedliche Vorrichtungen erkannt werden. Diese Veränderung kann beispielsweise durch die oben genannten Maßnahmen erfolgen, insbesondere durch das Auftragen und Entfernen eines Teils der ersten elektrisch leitfähigen Struktur auf die Vorrichtung beziehungsweise von der Vorrichtung.

Es ist im Sinne der Erfindung ganz besonders bevorzugt, dass die nachträgliche Veränderung der elektrisch leitfähigen Grundstruktur realisiert wird durch eine oder mehrere der folgenden Maßnahmen:
a) nachträgliches selektives und/oder lokales Auftragen von elektrisch leitfähigem Material,
b) nachträgliches selektives und/oder lokales Entfernen eines Teils der ersten elektrisch leitfähigen Struktur.,

Die nachträgliche Veränderung und/oder Bearbeitung der ersten leitfähigen Struktur kann beispielsweise auch eine nachträgliche Kombination von mindestens zwei elektrisch leitfähigen Grundstrukturen miteinander umfassen, das nachträgliche Teilen und/oder Trennen der elektrisch leitfähigen Grundstruktur, sowie eine nachträgliche Dimensionsveränderung der elektrisch leitfähigen Grundstruktur.

Durch eine oder mehrere dieser Maßnahmen wird vorzugsweise die zweite elektrisch leitfähige Struktur erhalten, die vorzugsweise auch als resultierende elektrisch leitfähige Struktur bezeichnet wird. Bei diesen Maßnahmen es ist möglich, dass die zweite elektrisch leitfähige Struktur erzeugt wird, indem die bestehende Grundstruktur selbst nicht verändert wird, sondern dass zum Beispiel Material zusätzlich zu der Grundstruktur hinzugefügt wird. Es ist dann im Sinne der Erfindung bevorzugt, die frühere, unveränderte Grundstruktur zusammen mit dem hinzugefügten Material als zweite elektrisch leitfähige Struktur zu bezeichnen, wobei die nachträglich Veränderung der Grundstruktur in dem Hinzufügen des zusätzlichen Materials besteht. Dieses zusätzliche Material kann bevorzugt elektrisch leitfähiges Material sein.

Es kann im Sinne der Erfindung ebenso bevorzugt sein, dass eine nachträgliche Veränderung in einer tatsächlichen physischen Veränderung der Grundstruktur besteht, beispielsweise indem Material aus der Grundstruktur entfernt wird oder die Grundstruktur durchtrennt wird. Im ersten Fall wird die zweite elektrisch leitfähige Struktur bevorzugt von der veränderten Grundstruktur gebildet, von der zumindest lokal Material entfernt wurde. Im zweiten Fall besteht die zweite elektrisch leitfähige Struktur bevorzugt aus den beiden elektrisch leitfähigen Strukturen, die vor dem Trennen die elektrisch leitfähige Grundstruktur bildeten. Es ist im Sinne der Erfindung insbesondere bevorzugt, dass die Maßnahmen zur Vornahme einer nachträglichen Veränderung einzeln ausgeführt werden können und auf diese Weise eine zweite elektrisch leitfähige Struktur erhalten wird. Es kann aber ebenso bevorzugt sein, zwei oder mehrere Maßnahmen miteinander zu kombinieren, beispielsweise indem sie nacheinander ausgeführt werden.

Die elektrisch leitfähige Grundstruktur ist dazu eingerichtet, ein erstes Signal auf dem kapazitiven Flächensensor festzulegen und die zweite elektrisch leitfähige Struktur ist dazu eingerichtet, ein zweites Signal auf dem Flächensensor festzulegen, wobei sich das erste Signal und das zweite Signal in ihrer Wirkung auf dem Flächensensor unterscheiden. Die unterschiedlichen elektrisch leitfähigen Strukturen legen unterschiedliche Signale auf dem Flächensensor fest.

Es ist bevorzugt, dass zu einem Zeitpunkt t_{A} eine Vorrichtung des vorgeschlagenen Systems mit einer elektrisch leitfähigen Grundstruktur vorliegt. Diese bewirkt auf einem Flächensensor ein erstes Signal. Zu einem Zeitpunkt t_{B}, der bei einem chronologischen Ablauf der Zeit bevorzugt nach dem ersten Zeitpunkt t_{A} liegt, weist die Vorrichtung des vorgeschlagenen Systems eine zweite elektrisch leitfähige Struktur auf. Diese bewirkt auf dem Flächensensor bevorzugt ein zweites Signal, das aufgrund der nachträglichen Veränderung der Vorrichtung nicht identisch ist mit dem ersten Signal, das mit der Vorrichtung, die die Grundstruktur aufweist, erhalten wurde. Die unterschiedlichen Signale stellen bevorzugt jeweils eine Abfolge von Signalen dar, die im Sinne der Erfindung als veränderbares zeitabhängiges Signal bezeichnet wird.

Die Zeitabhängigkeit des jeweiligen Signals wird durch die Modulation einer dynamischen Eingabe durch die Vorrichtung erreicht. Eine dynamische Eingabe ist im Sinne der Erfindung beispielsweise eine Bewegung oder eine Geste, die ein Nutzer ausführt. Diese Geste oder Bewegung hat eine bestimmte Dauer. Es ist im Stand der Technik beispielsweise bekannt, dass ein Nutzer mit einer Wisch-Bewegung ein Mobiltelefon entsperren kann oder dass mit weiteren Wisch- oder Schiebbewegungen Anwendungen (Applikationen oder "Apps") auf dem Berührungsbildschirm eines Mobiltelefons verschoben werden können. Diesen konventionellen Bewegungen ist gemein, dass sie vom Bildschirm des Mobiltelefons, das beispielsweise auch ein Flächensensor im Sinne der Erfindung darstellt, an der Stelle detektiert werden, an der sie vorgenommen werden. Wenn ein Nutzer beispielsweise eine Wischbewegung von links nach rechts mittig auf dem Bildschirm eines Mobiltelefons vornimmt, so detektiert der Touch-Controller des Berührungsbildschirms des Mobiltelefons diese Bewegung üblicherweise genau entlang des Wegs der Bewegung, die beispielsweise der Finger des Nutzers auf dem Bildschirm ausführt.

Mit der vorliegenden Erfindung wird es nunmehr überraschenderweise ermöglicht, ein System und ein Verfahren bereitzustellen, mit dem eine solche dynamische Eingabe eines Nutzers vom Flächensensor an einem anderen Ort oder auf eine andere Weise detektiert wird. Die Vorrichtung ermöglicht es beispielsweise, eine beispielsweise linienförmige dynamische Eingabe des Nutzers so zu verändern, dass sie vom Flächensensor als Wellenlinie erkannt wird. Dies wird vorzugsweise durch die Ausgestaltung der elektrisch leitfähigen Struktur auf der Vorrichtung erreicht. Beispielsweise kann das bevorzugt kartenähnliche Objekt, das vorzugsweise die Vorrichtung bildet, eine elektrisch leitfähige Struktur aufweisen, die eine Vielzahl von Einzelelementen umfasst. Es ist im Sinne der Erfindung bevorzugt, dass die Anordnung der Einzelelemente das zeitlich veränderliche Signal, das vom Flächensensor detektiert wird, festlegt, wobei die Detektion durch den Flächensensor bevorzugt dann erfolgt, wenn ein Nutzer mittels eines Eingabemittels eine Bewegung oder Geste auf der Vorrichtung, insbesondere der elektrisch leitfähigen Struktur auf der Vorrichtung, ausführt. Das zeitlich veränderliche Signal, welches im Flächensensor erzeugt wird, hat bevorzugt die gleiche Dauer wie die Geste oder Bewegung des Nutzers.

Im Kontext der vorliegenden Erfindung wird das zeitlich veränderliche Signal durch die Anordnung der Einzelelemente auf der Vorrichtung des vorgeschlagenen Systems festgelegt. Es ist im Sinne der Erfindung bevorzugt, dass die elektrisch leitfähige Struktur mindestens zwei Einzelelemente umfasst. Es kann aber für einige Anwendungen der Erfindung bevorzugt sein, dass die elektrisch leitfähige Struktur eine größere Zahl von Einzelelementen umfasst. Es ist insbesondere bevorzugt, dass die Vorrichtung des vorgeschlagenen Systems bei ihrer Verwendung auf einen Flächensensor aufgelegt wird. Dadurch wird vorzugsweise ein Wirkkontakt zwischen dem Flächensensor und der Vorrichtung, insbesondere ihrer elektrisch leitfähigen Struktur, erzeugt. Der Wirkkontakt beruht bevorzugt auf einer kapazitiven Wechselwirkung zwischen dem Flächensensor und der Vorrichtung. Wenn der Nutzer beispielsweise mit seinem Finger auf der Vorrichtung eine gerade linienförmige Bewegung ausführt, so wird die elektrisch leitfähige Struktur durch die Berührung auf ein elektrisches Potential gesetzt, das anders ist als das elektrische Potential der elektrisch leitfähigen Struktur ohne Berührung. Diese Potentialänderung kann vom Flächensensor erkannt werden. Es ist im Sinne der Erfindung insbesondere bevorzugt, dass die Einzelelemente der elektrisch leitfähigen Struktur während der Dauer dynamischen Eingabe nacheinander auf ein spezifisches elektrisches Potential gesetzt werden. Insbesondere werden die Einzelelemente der elektrisch leitfähigen Struktur auf ein spezifisches elektrisches Potential gesetzt, die von der Berührung des Fingers erfasst werden. Es ist im Sinne der Erfindung bevorzugt, dass die Summe der Berührungen und Bewegungen, die bei einer Bewegung des Eingabemittels oder eines Körperteils, beispielsweise eines Fingers, eines Nutzers erzeugt werden, als dynamische Eingabe im Sinne der Erfindung bezeichnet wird.

Wenn die elektrisch leitfähige Struktur beispielsweise aus länglichen Einzelelementen besteht, die nebeneinander um eine virtuelle Linie herum angeordnet vorliegen, wobei die Bestandteile der Einzelelemente rechts und links von der gedachten Linie unterschiedlich große Flächen abdecken oder ein unterschiedliches Volumen elektrisch leitfähiges Material umfassen, so kann die zunächst linienförmige Bewegung des Eingabemittels entlang der virtuellen Linie, das heißt die dynamische Eingabe, vom Flächensensor durch die Ausgestaltung der elektrisch leitfähigen Struktur verzerrt detektiert werden. Diese mögliche Verzerrung einer dynamischen Eingabe durch die Ausgestaltung der elektrisch leitfähigen Struktur auf der Vorrichtung wird im Sinne der Erfindung als Modulation der dynamischen Eingabe durch die elektrisch leitfähige Struktur bezeichnet.

Der Begriff "Modulation der dynamischen Eingabe" bedeutet im Sinne der Erfindung bevorzugt, dass das zeitabhängige Signal, welches auf dem Flächensensor erzeugt wird, bezüglich Position, Geschwindigkeit, Richtung, Form, Unterbrechung des Signals, Frequenz und/oder Signalstärke im Vergleich zur dynamischen Eingabe mindestens teilweise verändert ist. Dazu kann die erste elektrisch leitfähige Struktur und/oder die zweite elektrisch leitfähige Struktur jeweils mindestens zwei Einzelelemente umfassen. Insbesondere können die Einzelelemente der elektrisch leitfähigen Strukturen galvanisch getrennt voneinander vorliegen, das heißt sie können zum Beispiel so einen gro-ßen Abstand zueinander aufweisen, dass kein Ladungsaustausch zwischen den Einzelelementen erfolgt. Es kann beispielsweise im Sinne der Erfindung bevorzugt sein, dass die Einzelelemente der elektrisch leitfähigen Strukturen hinsichtlich Größe, Abstand und Form so dimensioniert sind, dass zu jedem Zeitpunkt der dynamischen Eingabe mindestens zwei Einzelelemente mindestens teilweise mit einem Eingabemittel in Wirkkontakt stehen, wobei die dynamische Eingabe mit dem Eingabemittel bewirkt wird. Es ist insbesondere bevorzugt, dass die Einzelelemente der elektrisch leitfähigen Strukturen hinsichtlich Größe, Abstand und Form so dimensioniert sind, dass zu jedem Zeitpunkt der dynamischen Eingabe mindestens zwei Einzelelemente mindestens teilweise mit einem Eingabemittel in Wirkkontakt stehen. Dabei wird das Eingabemittel vorzugsweise dazu verwendet, eine Relativbewegung auf der Vorrichtung beziehungsweise der elektrisch leitfähigen Struktur auf der Vorrichtung auszuführen, um eine dynamische Eingabe zu erzeugen. Es ist im Sinne der Erfindung bevorzugt, dass die dynamische Eingabe modulierbar ist, wobei das Signal auf dem Flächensensor durch die Form und/oder Gestalt der elektrisch leitfähigen Struktur auf der Vorrichtung festgelegt wird.

Es ist im Sinne der Erfindung insbesondere bevorzugt, dass ein Verlauf des zeitabhängigen Signals auf dem kapazitiven Flächensensor durch Anordnung, elektrische Leitfähigkeit, Größe, Abstand und/oder Form der Einzelelemente der elektrisch leitfähigen Strukturen und/oder durch die Richtung und/oder Geschwindigkeit der dynamischen Eingabe bestimmbar ist. Mit anderen Worten ist ein Verlauf des zeitabhängigen Signals auf dem kapazitiven Flächensensor durch Anordnung, elektrische Leitfähigkeit, Größe, Abstand und/oder Form der Einzelelemente der elektrisch leitfähigen Strukturen und/oder durch die Richtung und/oder Geschwindigkeit der dynamischen Eingabe bestimmbar und/oder kann dadurch determiniert werden.

Ausgehend von einer beispielhaften Eingabe in Form einer geraden, linienförmigen Bewegung auf einem oder mehreren Einzelelementen der elektrisch leitfähigen Struktur bedeutet dies im Sinne der Erfindung bevorzugt, dass das erzeugte zeitabhängige Signal aufgrund der Modulation durch die Vorrichtung, beziehungsweise ihre elektrisch leitfähige Struktur, gegenüber der geraden, linienförmigen Eingabe eine abweichende Position, Richtung, Form und/oder Signalstärke aufweisen kann, das heißt beispielsweise räumlich versetzt, verzerrt und/oder verschoben vom Flächensensor erkannt wird. Dies führt bevorzugt zu einer anderen Form des detektierten elektrischen Signals im Vergleich zur Form der geraden, linienförmigen Bewegung, welche bevorzugt die dynamische Eingabe bildet. Es ist im Sinne der Erfindung insbesondere bevorzugt, dass die dynamische Eingabe bezüglich Position, Geschwindigkeit, Richtung, Form, Unterbrechung des Signals, Frequenz und/oder Signalstärke modulierbar ist.

Dieses zeitabhängige Signal, welches bezüglich Position, Geschwindigkeit, Richtung, Form, Unterbrechung des Signals, Frequenz und/oder Signalstärke im Vergleich zur dynamischen Eingabe mindestens teilweise verändert ist, ist wesentlich komplexer als die aus dem Stand der Technik bekannten statischen Touch-Muster, wie sie zum Beispiel in WO 2011/154524 A1 oder WO 2014/064288 A1 beschrieben werden. Die Komplexität und der zeitliche Verlauf beziehungsweise Insbesondere die Dynamik des Signals ermöglichen im Vergleich zum Stand der Technik die Kodierung wesentlich höherer Datenmengen auf gleicher Flächengröße der Vorrichtung, eine robustere, weniger fehleranfälligere Auswertung, den Einsatz einer größeren Bandbreite an Substratmaterialien hinsichtlich Dicke und Grammatur, die Kompatibilität zu älteren Berührungsbildschirmen sowie eine wesentlich erhöhte Manipulationssicherheit.

Es war vollkommen überraschend, dass durch das vorgeschlagene System und das vorgeschlagene Verfahren durch die Geometrie der elektrisch leitfähigen Struktur, insbesondere die Anordnung, elektrische Leitfähigkeit, Form, Größe und Abstand der Einzelelemente, Daten kodiert werden können, das heißt auf dem Datenträger gespeichert und/oder hinterlegt werden. Die elektrisch leitfähige Struktur legt vorzugsweise das zeitabhängige Signal, welches vom Flächensensor detektiert werden kann, fest. Die Auswertung des zeitabhängigen Signals auf dem den Flächensensor beinhaltenden Gerät kann als Dekodierung bezeichnet werden. Auf dem Gerät kann basierend auf dem Ergebnis der Dekodierung eine bestimmte Aktion ausgelöst werden. Eine einfache Aktion ist beispielsweise die Identifikation des Datenträgers beziehungsweise des Objektes oder Dokumentes, auf dem der Datenträger appliziert ist.

In einer bevorzugten Ausführungsform der Erfindung sind die Einzelelemente der elektrisch leitfähigen Struktur hinsichtlich Größe, Abstand und Form so dimensioniert, dass zu jedem Zeitpunkt der dynamischen Eingabe mindestens zwei Einzelelemente mindestens teilweise mit dem Eingabemittel in Wirkkontakt stehen. Das bedeutet im Sinne der Erfindung bevorzugt, dass zwei benachbarte Einzelelemente der elektrisch leitfähigen Struktur beispielsweise keinen Abstand zueinander aufweisen dürfen, der größer ist als die übliche Breite eines Eingabemittels, zum Beispiel eines menschlichen Fingers, weil das Eingabemittel dann nicht in der Lage wäre, beide benachbarte Einzelelemente gleichzeitig zu berühren.

Die elektrisch leitfähige Struktur wird vorzugsweise zu einem Zeitpunkt t_{A} von einer ersten elektrisch leitfähigen Struktur gebildet ("Grundstruktur") und zu einem Zeitpunkt t_{B} von einer zweiten elektrisch leitfähigen Struktur. Der Unterschied zwischen den elektrisch leitfähigen Strukturen besteht in einer nachträglichen Veränderung, mit der die erste Struktur in die zweite Struktur überführt werden kann, wobei die erste und die zweite elektrisch leitfähige Struktur jeweils unterschiedliche elektrische Signale auf dem Flächensensor hervorrufen. Dies geschieht vorzugsweise dann, wenn die Vorrichtung, auf der die elektrisch leitfähigen Strukturen angeordnet vorliegen, mit einem Flächensensor im Wirkkontakt steht. Darüber hinaus wird eine dynamische Eingabe mit einem Eingabemittel ausgeführt, das heißt eine Bewegung eines Eingabemittels auf der Vorrichtung. Mit anderen Worten ist das Eingabemittel dazu eingerichtet, in Zusammenwirken mit der Vorrichtung eine dynamische Eingabe zu bewirken. Es ist im Sinne der Erfindung besonders bevorzugt, dass die erste und die zweite elektrisch leitfähige Struktur die dynamische Eingabe des Nutzers unterschiedlich modulieren, das heißt beispielsweise verzerren. Dadurch werden vorzugsweise unterschiedliche Signale auf dem Flächensensor erzeugt. Das kann zum Beispiel dadurch geschehen, dass im Rahmen der nachträglichen Veränderung Material aus der elektrisch leitfähigen Struktur entfernt wird. In dem Ausführungsbeispiel, in dem eine gedachte Linie, auf der die dynamische Eingabe eines Nutzers erfolgt, eine elektrisch leitfähige Struktur virtuell in eine rechte und eine linke Hälfte teilt, kann es beispielsweise bevorzugt sein, dass auf der einen Seite der elektrisch leitfähigen Struktur mehr von dem elektrisch leitfähigen Material, das vorzugsweise die elektrisch leitfähige Struktur bildet, entfernt wird als von der anderen Seite. Dadurch wird vorzugsweise von der zweiten elektrischen Struktur eine andere Verzerrung, das heißt vorzugsweise eine Modulation, hervorgerufen, als von der ersten elektrisch leitfähigen Struktur. Die unterschiedlichen Modulationen führen demnach bevorzugt zu unterschiedlichen elektrischen Signalen auf dem Flächensensor.

Die Veränderbarkeit in dem Begriff "veränderbares zeitabhängiges Signal" bezieht sich in der vorliegenden Erfindung vorzugsweise auf die veränderte Wirkung der Vorrichtung auf dem Flächensensor, die durch die unterschiedlichen elektrisch leitfähigen Strukturen, das heißt der Grundstruktur zum Zeitpunkt t_{A} und der resultierenden elektrisch leitfähigen Struktur zum Zeitpunkt t_{B}, hervorgerufen werden. Es ist selbstverständlich möglich, dass mehrere Veränderungen an der elektrisch leitfähigen Struktur kombiniert werden und beispielsweise zum Zeitpunkt tc ein drittes Signal auf dem Flächensensor hervorgerufen wird. Ein solcher Vorgang kann beliebig häufig wiederholt werden.

Die Zeitabhängigkeit in Bezug auf den Begriff "veränderbares zeitabhängiges Signal" bezieht sich auf das jeweilige Signal selbst, welches auf dem Flächensensor erzeugt wird. Jedes Signal für sich stellt ein zeitabhängiges Signal dar und hat eine bestimmte Dauer, die bevorzugt der Dauer der dynamischen Eingabe entspricht. Zeitpunkte, die sich auf die dynamische Eingabe durch ein Eingabemittel beziehen, werden im Folgenden mit tᵢ, das heißt t₁, t₂, t₃, usw. bezeichnet.

In einem weiteren Aspekt betrifft die Erfindung ein Verfahren zur Erzeugung eines veränderbaren zeitabhängigen Signals auf einem kapazitiven Flächensensor, umfassend die folgenden Schritte:
a) Bereitstellung einer Vorrichtung umfassend eine erste elektrisch leitfähige Struktur umfassend mindestens zwei galvanisch voneinander getrennte Einzelelemente ,
b) Veränderung der ersten elektrisch leitfähigen Struktur, wodurch eine zweite elektrisch leitfähige Struktur umfassend mindestens zwei galvanisch voneinander getrennte Einzelelemente erhalten wird,
c) Auflegen der Vorrichtung auf den kapazitiven Flächensensor, wobei die zweite elektrisch leitfähige Struktur mit dem kapazitiven Flächensensor mindestens teilweise in einem Wirkkontakt steht
d) Vornahme einer dynamischen Eingabe in Form einer Bewegung eines Eingabemittels durch einen Nutzer auf der zweiten elektrisch leitfähigen Struktur während die zweite elektrisch leitfähige Struktur mit dem kapazitiven Flächensensor mindestens teilweise in einem Wirkkontakt steht, sodass ein zweiten zeitabhängiges Signals auf dem kapazitiven Flächensensor erzeugt wird, welches durch eine räumliche Anordnung, elektrische Leitfähigkeit, Größe, Abstand und/oder Form der Einzelelemente der zweiten elektrisch leitfähigen Struktur festgelegt wird.

Es ist im Sinne der Erfindung bevorzugt, dass das Verfahren zusätzlich zu den genannten Schritten a) bis d) die folgenden Schritte umfasst:
a1) Auflegen der Vorrichtung auf den kapazitiven Flächensensor,
a2) Erzeugung eines ersten Signals auf dem kapazitiven Flächensensor durch eine dynamische Eingabe mit einem Eingabemittel und eine erste Modulation der dynamischen Eingabe und Übertragung auf den kapazitiven Flächensensor durch die erste elektrisch leitfähige Struktur.

Diese Schritte a1) und a2) werden vorzugsweise zwischen dem Schritt a) und dem Schritt b) des oben beschriebenen Verfahrens durchgeführt.

Es ist im Sinne der Erfindung besonders bevorzugt, dass das erste Signal durch die erste elektrisch leitfähige Struktur festgelegt wird und das zweite Signal durch die zweite elektrisch leitfähige Struktur festgelegt wird.

Es ist im Sinne der Erfindung bevorzugt, dass das System eine Vorrichtung, eine elektrisch leitfähige Struktur, einen kapazitiven Flächensensor und ein Eingabemittel umfassen kann, wobei die elektrisch leitfähige Struktur nachträglich veränderbar sein kann, insbesondere durch einen Stift, mit dem beispielsweise elektrisch leitfähiges Material auf die Vorrichtung aufgetragen oder von ihr entfernt werden kann oder die Eigenschaften der elektrisch leitfähigen Struktur auf der Vorrichtung geändert werden können.

Es ist im Sinne der Erfindung bevorzugt, dass die Vorrichtung einem ersten Zustand und in einem zweiten Zustand vorliegen kann, wobei der erste Zustand durch die erste elektrisch leitfähige Struktur gekennzeichnet ist und wobei der zweite Zustand durch die zweite elektrisch leitfähige Struktur gekennzeichnet ist, wobei die erste elektrisch leitfähige Struktur durch eine Veränderung in die zweite elektrisch leitfähige Struktur überführt werden kann. Es ist insbesondere bevorzugt, dass die Vorrichtung eine erste elektrisch leitfähige Struktur und eine zweite elektrisch leitfähige Struktur umfasst, wobei die erste elektrisch leitfähige Struktur dazu eingerichtet ist, ein erstes Signal auf dem kapazitiven Flächensensor festzulegen, und die zweite elektrisch leitfähige Struktur dazu eingerichtet ist, ein zweites Signal auf dem kapazitiven Flächensensor zu festzulegen, wobei die zweite elektrisch leitfähige Struktur durch eine Veränderung der ersten elektrisch leitfähigen Struktur erzeugbar ist. Es ist insbesondere bevorzugt, wenn das System und/oder die Vorrichtung eine elektrisch leitfähige Struktur in mindestens zwei unterschiedlichen Ausprägungen umfasst, wobei die unterschiedlichen Ausprägungen vorzugsweise auch als erste und zweite elektrisch leitfähige Struktur bezeichnet werden. Es ist im Sinne der Erfindung insbesondere bevorzugt, dass das veränderbare zeitabhängige Signal auf dem kapazitiven Flächensensor durch die erste elektrisch leitfähige Struktur und die zweite elektrisch leitfähige Struktur festgelegt wird.

In einer bevorzugten Ausführungsform der Erfindung umfasst das Verfahren die folgenden Schritte:
a) Bereitstellung einer Vorrichtung mit einer elektrisch leitfähigen Grundstruktur
b) Erzeugung eines ersten elektrischen Signals auf einem Flächensensor
c) Nachträgliche Veränderung der Vorrichtung, insbesondere der elektrisch leitfähigen Grundstruktur, wodurch eine zweite elektrisch leitfähige Struktur erhalten wird,
d) Erzeugung eines zweiten elektrischen Signals auf einem Flächensensor.

In einer Ausführungsform des Verfahrens ist es bevorzugt, dass zwischen der Vorrichtung und dem Flächensensor ein Wirkkontakt besteht, beispielsweise dadurch, dass die Vorrichtung auf den Flächensensor aufgelegt wird. Es ist ferner bevorzugt, dass ein Nutzer eine dynamische Eingabe vornimmt, die vorzugsweise in einer Bewegung auf der Vorrichtung besteht, die vorzugsweise unter Verwendung eines Eingabemittels vorgenommen wird. Es ist bevorzugt, dass die Wirkung der dynamischen Eingabe, die vom Flächensensor erkannt wird, beispielsweise in ihrer Form, nicht der ursprünglichen Form der dynamischen Eingabe entspricht, sondern dass die Eingabe durch die Vorrichtung, die beispielsweise zwischen Nutzerfinger und Flächensensor angeordnet vorliegt, verzerrt wird. Dies geschieht in einer besonders bevorzugten Ausführungsform der Erfindung durch die elektrisch leitfähige Struktur auf der Vorrichtung, die bevorzugt von zwei oder mehr Einzelelementen gebildet wird. Je nach Ausgestaltung der elektrisch leitfähigen Struktur, das heißt insbesondere der Anordnung und Ausgestaltung der Einzelelemente der Struktur, wird die dynamische Eingabe schwächer oder stärker verzerrt, wobei diese Verzerrung im Sinne der Erfindung als Modulation bezeichnet wird. Das zuvor beschriebene Verfahren kann in einer bevorzugten Ausführungsform wie folgt beschrieben werden:
a) Bereitstellung einer Vorrichtung mit einer elektrisch leitfähigen Grundstruktur, insbesondere:
   a1) Herstellung eines Wirkkontakts zwischen einem Flächensensor und der Vorrichtung
   a2) Vornahme einer dynamischen Eingabe durch ein Eingabemittel auf der Vorrichtung, insbesondere auf der elektrisch leitfähigen Struktur,
   a3) Modulation der dynamischen Eingabe durch die elektrisch leitfähige Grundstruktur auf der Vorrichtung und vorzugsweise im Wesentlichen gleichzeitig:
   a4) Erzeugung eines ersten elektrischen Signals auf dem Flächensensor
b) Nachträgliche Veränderung der Vorrichtung, insbesondere der elektrisch leitfähigen Grundstruktur, wodurch eine zweite elektrisch leitfähige Struktur erhalten wird, insbesondere:
   b1) Herstellung eines Wirkkontakts zwischen einem Flächensensor und der Vorrichtung
   b2) Vornahme einer dynamischen Eingabe durch ein Eingabemittel auf der Vorrichtung, insbesondere auf der elektrisch leitfähigen Struktur,
   b3) Modulation der dynamischen Eingabe durch die zweite elektrisch leitfähige Struktur auf der Vorrichtung und vorzugsweise im Wesentlichen gleichzeitig:
   b4) Erzeugung eines zweiten elektrischen Signals auf einem Flächensensor

Es ist im Sinne der Erfindung besonders bevorzugt, dass die elektrischen Signale auf dem Flächensensor gemäß der Schritte a4) und b4) in dieser bevorzugten Ausführungsform der Erfindung jeweils durch die vorgehenden Teilschritte erzeugt werden.

Für verschiedene Anwendungen kann es im Sinne der Erfindung auch bevorzugt sein, dass die Vorrichtung mehr als eine elektrisch leitfähige Struktur umfasst. Diese können beispielsweise parallel zueinander oder um einen Winkel gegeneinander verdreht auf dem Objekt angeordnet vorliegen, wodurch sich komplexe Interaktionsmöglichkeiten zwischen den einzelnen elektrisch leitfähigen Strukturen ergeben können.

Die dynamische Eingabe erfolgt auf der Vorrichtung mit einem Eingabemittel. Die Bewegung des Eingabemittels auf dem kartenähnlichen Objekt kann beispielsweise eine geradlinige Bewegung in Form einer Linie sein. Eine solche linienförmige Bewegung würde von einem Flächensensor, wenn sie direkt auf dem berührungsempfindlichen Display ausgeführt würde, als linienförmige Eingabe erkannt. Wenn jedoch die linienförmige Bewegung auf einer Vorrichtung, das eine elektrisch leitfähige Struktur aufweist, ausgeführt wird, so "sieht" der Flächensensor eine Momentaufnahme, die durch die räumliche Ausgestaltung der elektrisch leitfähigen Struktur des kartenähnlichen Objekts verändert ist, das heißt in der Regel nicht mehr linienförmig sein wird, wenn nicht zufällig alle Elemente der elektrisch leitfähigen Struktur ausschließlich symmetrisch und/oder kongruent zueinander angeordnet vorliegen. Somit unterscheiden sich die tatsächliche Bewegung des Eingabemittels auf dem Objekt und die Wahrnehmung des kapazitiven Flächensensors von dieser Bewegung, wobei diese Umwandlung von der Vorrichtung durch die räumliche Anordnung der Bestandteile und/oder Elemente der elektrisch leitfähigen Struktur bewirkt wird und im Sinne der Erfindung bevorzugt als Modulation, Veränderung, Verzerrung oder Verschiebung bezeichnet wird. Es ist im Sinne der Erfindung bevorzugt, dass die Bewegung des Eingabemittels auf der Vorrichtung als dynamische Eingabe bezeichnet wird und die Wahrnehmung des Flächensensors, also das, was der Flächensensor von der Eingabe, moduliert durch das Objekt, erkennt, als elektrisches Signal. Es ist im Sinne der Erfindung bevorzug, dass das Signal im Flächensensor erzeugt wird, wobei das Signal insbesondere durch die Form und/oder Gestalt der elektrisch leitfähigen Strukturen auf der Vorrichtung festgelegt wird. Es ist im Sinne der Erfindung bevorzugt, dass das Eingabemittel von einem Körperteil eines Nutzers, beispielsweise seinem Finger, gebildet wird. Es sind aber auch andere Eingabemittel, wie Eingabestifte, Touchstifte, Touchpens oder dergleichen denkbar, wobei die Eingabestifte und Touchstifte nicht mit dem Stift verwechselt werden dürfen, mit dem beispielsweise eine Veränderung der elektrisch leitfähigen Grundstruktur auf der Vorrichtung bewirkt werden kann.

In einer Ausgestaltung der Erfindung ist es bevorzugt, dass ein Verlauf des zeitabhängigen Signals auf dem kapazitiven Flächensensor durch Anordnung, elektrische Leitfähigkeit, Größe, Abstand und/oder Form der Einzelelemente der elektrisch leitfähigen Struktur und/oder durch die Richtung und/oder Geschwindigkeit der dynamischen Eingabe bestimmbar ist. Das bedeutet im Sinne der Erfindung, dass insbesondere die Anordnung, elektrische Leitfähigkeit, Größe, Abstand und/oder Form der Einzelelemente der elektrisch leitfähigen Struktur die Modulation der dynamischen Eingabe bestimmen und das elektrische Signal auf dem Flächensensor beeinflussen.

Die Grundidee der vorliegenden Erfindung ist die nachträgliche Veränderung von elektrisch leitfähigen Strukturen auf Vorrichtungen und kartenähnlichen Objekten zur Erzeugung zeitabhängiger Signale auf einem Flächensensor. Zur nachträglichen Veränderung der Strukturen werden beispielsweise folgenden Möglichkeiten vorgeschlagen: Hinzufügen oder Entfernen von elektrisch leitfähigem Material, Kombination oder Teilen von elektrisch leitfähigen Strukturen oder Dimensionsänderung von elektrisch leitfähigen Strukturen. Mit der vorliegenden Erfindung wird es überraschenderweise ermöglicht, einfach oder mehrfach veränderbare kapazitive Speicher bereitzustellen.

Im einfachsten Fall wird die Vorrichtung, die in diesem Ausführungsbeispiel vorzugsweise als beschreibbarer und/oder veränderbarer kapazitiver Speicher oder Datenträger bezeichnet wird, im wahrsten Sinne des Wortes mit einem Stift beschrieben und damit verändert. Die nachträgliche Veränderung im Sinne der Erfindung besteht in diesem Ausführungsbeispiel in dem Beschreiben mit einem Stift, wobei die Tinte, die von dem Stift abgegeben wird, zum Beispiel elektrisch leitfähiges Material umfassen kann, so dass durch das Beschreiben mit dem Stift zusätzliches elektrisch leitfähiges Material auf die Vorrichtung aufgetragen wird. Es ist im Sinne der Erfindung insbesondere bevorzugt, dass hierfür ein elektrisch leitfähiger Stift verwendet wird, womit im Sinne der Erfindung bevorzugt ein Stift bezeichnet wird, der elektrisch leitfähige Farbe und/oder Tinte umfasst und diese auf ein Substrat aufbringen und/oder übertragen kann. Insbesondere kann mit einem elektrisch leitfähigen Stift eine elektrisch leitfähige Struktur auf einem Substrat erzeugt und/oder modifiziert werden.

Es ist im Sinne der Erfindung bevorzugt, ein System zur Erzeugung eines veränderbaren zeitabhängigen Signals auf einem kapazitiven Flächensensor bereitzustellen, wobei das System eine Vorrichtung, einen kapazitiven Flächensensor und ein Eingabemittel umfasst, wobei die Vorrichtung eine erste elektrisch leitfähige Struktur und eine zweite elektrisch leitfähige Struktur umfasst.

Die auf der Vorrichtung vorliegende elektrisch leitfähige Struktur vor der Veränderung wird im Folgenden als Grundstruktur bezeichnet. Diese Grundstruktur umfasst vorzugsweise eine Vielzahl von Einzelelementen, die auf der Vorrichtung angeordnet vorliegen, wobei das zeitabhängige Signal durch die räumliche Anordnung und Dimensionierung der Einzelelemente auf dem kartenähnlichen Objekt festgelegt und durch eine Relativbewegung zwischen einem Eingabemittel und der Vorrichtung erzeugt wird. Dieses zeitabhängige Signal, welches durch die Grundstruktur bestimmt wird, wird im Folgenden als Referenzsignal bezeichnet.

Die Erfindung betrifft in einer bevorzugten Ausführungsform eine Vorrichtung zur Erzeugung eines veränderbaren zeitabhängigen Signals auf einem kapazitiven Flächensensor umfassend eine elektrisch leitfähige Grundstruktur, wobei eine nachträgliche Veränderung der elektrisch leitfähigen Grundstruktur durch
a) nachträgliches selektives und/oder lokales Auftragen von elektrisch leitfähigem Material und/oder
b) nachträgliches selektives und/oder lokales Entfernen eines Teils der ersten elektrisch leitfähigen Struktur und/oder
c) nachträgliche Veränderung der Eigenschaften, insbesondere der elektrischen Leitfähigkeit, der ersten elektrisch leitfähigen Struktur.
realisiert wird, wobei durch die nachträgliche Veränderung der Grundstruktur eine zweite elektrisch leitfähige Struktur auf der Vorrichtung erzeugt wird, die vorzugsweise mit dem kapazitiven Flächensensor mindestens teilweise in einem Wirkkontakt steht, wobei die Erzeugung des zeitabhängigen Signals auf dem kapazitiven Flächensensor durch eine dynamischen Eingabe mittels Eingabemittel auf der Vorrichtung initiiert wird und die dynamische Eingabe durch die elektrisch leitfähige Struktur moduliert wird.

In einer weiteren Ausführungsform kann die nachträgliche Veränderung der Grundstruktur auch durch folgende Maßnahmen erfolgen:
a) nachträgliche Kombination von mindestens zwei elektrisch leitfähigen Grundstrukturen miteinander,
b) nachträgliches Teilen der elektrisch leitfähigen Grundstruktur und/oder
c) nachträgliche Dimensionsveränderung der elektrisch leitfähigen Grundstruktur.

In einer bevorzugten Ausführungsform der Erfindung ist das zeitabhängige Signal von der Vorrichtung auf den kapazitiven Flächensensor übertragbar. Die Erzeugung des zeitabhängigen Signals auf dem kapazitiven Flächensensor erfolgt durch Modulation einer dynamischen Eingabe durch die Vorrichtung, insbesondere der elektrisch leitfähigen Struktur auf der Vorrichtung.

Im Sinne der Erfindung ist es bevorzugt, dass das zeitabhängige Signal durch eine Bewegung eines Eingabemittels auf der Vorrichtung hervorgerufen wird, die als dynamische Eingabe von der räumlichen Anordnung einer elektrisch leitfähigen Struktur auf der Vorrichtung moduliert, das heißt insbesondere verändert wird, so dass auf dem Flächensensor ein zeitlich veränderliches Signal entsteht, dass sich aus Momentaufnahmen der aktivierten Bereiche der elektrisch leitfähigen Struktur zusammensetzt, die durch die kurzzeitige Berührung mit dem Eingabemittel für kurze Zeit aktiviert werden, wobei die Gesamtheit der Kurzzeit-Berührungen und Bewegungen der Bewegung des Eingabemittels entspricht. Ein Eingabemittel im Sinne der Erfindung ist vorzugsweise mindestens teilweise elektrisch leitfähig. Mögliche Eingabemittel umfassen Finger, Touch-Stifte, Bedienstifte für Touchscreens, Eingabestifte für Touchscreens, Stylus, Touchpen oder andere elektrisch leitfähige Objekte, die sich zur Eingabe auf kapazitiven Flächensensoren eignen ohne darauf beschränkt zu sein.

Anwendungen für nachträgliche Veränderungen von kapazitiven Speichern umfassen zum Beispiel die Statusänderung, das Entwerten, das Aktivieren, das Deaktivieren, das Hinzufügen von Zusatzinformationen und/oder das Anpassen von kapazitiven Speichern, sowie jede Kombination davon. Generell weicht die Struktur, die durch diese Veränderung entsteht, von einer Grundstruktur ab, die zunächst auf einem Substrat vorliegt. Es im Sinne der Erfindung bevorzugt, eine Struktur, die zunächst auf dem einem Substrat erzeugt wird, als Grundstruktur zu bezeichnen, und die durch die Modifikation erhaltene Struktur als resultierende oder zweite elektrisch leitfähige Struktur. Es ist im Sinne der Erfindung bevorzugt, dass der räumliche und/oder zeitliche Verlauf des zeitabhängigen Signals auf dem Display eines Flächensensors angezeigt werden kann. Es ist im Sinne der Erfindung insbesondere bevorzugt, dass mit der Erfindung einem Dokument, auf dem die Vorrichtung des vorgeschlagenen Systems beispielsweise angeordnet vorliegt, mindestens ein erster und ein zweiter Status zugeordnet werden kann. Insbesondere können sich der erste und der zweite Status voneinander unterscheiden, wobei der Unterschied zwischen dem ersten und dem zweiten Status für einen kapazitiven Flächensensor erkennbar ist, insbesondere durch die unterschiedlichen Signale, die die beiden Dokumenten-Status auf dem Flächensensor hervorrufen. Es ist im Sinne der Erfindung bevorzugt, wenn jeder der mindestens zwei Dokumenten-Status mit einer spezifischen Ausprägung der elektrisch leitfähigen Struktur assoziiert ist, das heißt ein erster Dokumenten-Status mit der elektrisch leitfähigen Grundstruktur und ein zweiter Dokumenten-Status mit der resultierenden elektrisch leitfähigen Struktur. Es ist bevorzugt, dass die beiden elektrisch leitfähigen Strukturen unterschiedliche Modulationen einer dynamischen Eingabe hervorrufen, die vorteilhafterweise vom kapazitiven Flächensensor als unterschiedliche Signale wahrgenommen werden.

Kapazitive Flächensensoren umfassen Berührungsbildschirme, Touchscreens und Touchsensoren, die vorzugsweise in einem elektronischen Gerät als Ein- und/oder Ein-/Ausgabeschnittstelle integriert sind, ohne darauf beschränkt zu sein. Vorzugsweise verfügt der kapazitive Berührungsbildschirm zusätzlich über Anzeigemöglichkeiten. Solche Komponenten stellen sowohl eine Eingabeschnittstelle als auch eine Ausgabeschnittstelle dar und sind in elektronischen Geräten, wie zum Beispiel Smartphones, Tablets, Laptops oder Computer eingebaut. Kapazitive Flächensensoren umfassen darüber hinaus auch eigenständige Geräte, welches als reine Eingabeschnittstelle fungieren.

Bei der Vorrichtung kann es sich vorzugsweise um ein kartenähnliches Objekt oder eine beispielsweise dreidimensionale Vorrichtung handeln. Das Substratmaterial der Vorrichtung ist vorzugsweise ein elektrisch nicht leitfähiges Material, zum Beispiel Papier, Pappe, Karton, Spezialpapiere, Folie, Textilien, Leder, Kunstleder, Holz, Laminate, Kunststoffe oder andere elektrisch nicht leitfähige Materialien. Vorzugsweise wird das Material mit der elektrisch leitfähigen Grundstruktur bedruckt. Bevorzugte Druckverfahren für die Produktion der Vorrichtung der vorliegenden Erfindung sind Offsetdruck, Flexodruck, Tiefdruck, Siebdruck, Inkjetdruck, andere Digitaldruckverfahren, Folientransferverfahren, Kaltfolientransferverfahren, Heißprägen, Thermotransferdruck, die Applikation mittels Stiften sowie andere Beschichtungs- und Strukturierungsverfahren ohne darauf beschränkt zu sein.

Es ist im Sinne der Erfindung bevorzugt, dass durch die Veränderung der elektrisch leitfähigen Grundstruktur auf einem kapazitiven Flächensensor ein anderes zeitabhängiges Signal erzeugt wird, als das Signal, welches von der Grundstruktur erzeugt wird, wobei die beiden unterschiedlichen Signale beziehungsweise ihre Unterschiede vorteilhafterweise von einem Flächensensor detektierbar sind.

Grundsätzlich kann die Veränderung der Vorrichtung durch folgende Aktionen erfolgen:
1. Auf eine bestehende elektrisch leitfähige Struktur wird nachträglich lokal elektrisch leitfähiges Material aufgetragen, zum Beispiel mit einem Stift mit elektrisch leitfähiger Tinte oder durch nachträgliches Bedrucken mittels elektrisch leitfähiger Tinte. Dadurch werden zum Beispiel Elemente der Grundstruktur galvanisch und/oder kapazitiv verbunden oder es werden Elemente zur Grundstruktur hinzugefügt. Mit anderen Worten ist es in einer Ausführungsform der Erfindung bevorzugt, dass das selektive und/oder lokale Auftragen von elektrisch leitfähigem Material mittels eines Stiftes mit elektrisch leitfähiger Tinte oder durch Bedrucken mittels elektrisch leitfähiger Tinte oder Farbe erfolgt.
2. Die elektrisch leitfähige Grundstruktur selbst oder eine auf der elektrisch leitfähigen Grundstruktur aufgetragene elektrisch leitfähige Deckschicht wird selektiv oder lokal entfernt oder deren Eigenschaften geändert, zum Beispiel durch Perforation, Anwendung eines Lasers oder Applikation eines Lösemittels, beispielsweise mit einem Stift. Dadurch werden beispielsweise
   a. Elemente der Grundstruktur entfernt, beziehungsweise unterbrochen oder
   b. Elemente der Grundstruktur durch das Entfernen der Deckschicht freigelegt oder
   c. Die elektrischen Eigenschaften, insbesondere die elektrische Leitfähigkeit, von Teilen der Grundstruktur verändert.
3. Zwei verschiedene elektrisch leitfähige Strukturen werden miteinander kombiniert und ergeben zusammen eine neue elektrisch leitfähige Struktur, zum Beispiel indem zwei Sticker überlappend und/oder angrenzend aneinander angeordnet werden.
4. Teilen der elektrisch leitfähigen Struktur: eine elektrisch leitfähige Struktur ist zum Beispiel wie ein Siegel an einer Verpackung angebracht und wird durch das Öffnen der Verpackung getrennt.
5. Dimensionsveränderungen, zum Beispiel Dehnen oder Schrumpfen, der elektrisch leitfähigen Grundstruktur durch äußere Einflüsse, zum Beispiel mechanische Belastung, Temperatureinwirkung, Feuchteeinwirkung etc.

In einer bevorzugten Ausführungsform der Erfindung liegen die Einzelelemente der elektrisch leitfähigen Struktur galvanisch getrennt voneinander vor. Das bedeutet im Sinne der Erfindung bevorzugt, dass die entsprechenden Einzelelemente keine elektrisch leitende Verbindung untereinander aufweisen. Wenn zum Beispiel die elektrisch leitfähige Grundstruktur Einzelelemente aufweist, die nicht elektrisch leitend miteinander verbunden sind, so können solche Einzelelemente im Rahmen der nachträglichen Veränderung elektrisch leitend miteinander verbunden werden, beispielsweise indem eine etwaige Lücke zwischen den Einzelelementen mit einem elektrisch leitfähigen Stift übermalt wird, wodurch vorteilhafterweise elektrisch leitfähiges Material in die Lücke zwischen die zuvor nicht elektrisch leitend verbundenen Einzelelemente eingebracht wird, wodurch eine elektrisch leitende Verbindung hergestellt werden kann.

In einer Ausgestaltung der Erfindung ist es bevorzugt, eine Individualisierung der Vorrichtung des vorgeschlagenen Systems durch eine oder mehrere der folgenden Maßnahmen bewirkbar ist:
a) das Auftragen von elektrisch leitfähigem Material mit einem Stift mit elektrisch leitfähiger Tinte,
b) durch Bedrucken mit einem elektrisch leitfähigen Material, insbesondere elektrisch leitfähiger Tinte, im Inkjetdruckverfahren und/oder
c) durch ein selektives Entfernen eines Teils der ersten elektrisch leitfähigen Struktur,
d) das Auftragen eines Materials, das dazu eingerichtet ist, Eigenschaften, insbesondere die elektrische Leitfähigkeit, der ersten elektrisch leitfähigen Struktur zu verändern.

Insbesondere kann durch das selektive und/oder lokale Auftragen von elektrisch leitfähigem Material mit einem Stift mit elektrisch leitfähiger Tinte oder Farbe oder durch Bedrucken mittels elektrisch leitfähiger Tinte im Inkjetdruckverfahren eine Regionalisierung, Serialisierung oder Individualisierung der elektrisch leitfähigen Grundstruktur erfolgen. Dadurch lassen sich beispielsweise Datenträger, Dokumente, Passdokumente oder Geldscheine mit einer Seriennummer versehen, wodurch die vorliegenden Erfindung vorteilhafterweise auch bei sicherheitsrelevanten Dokumenten einsetzbar ist.

In einer bevorzugten Ausführungsform der Erfindung wird das veränderbare zeitabhängige Signal auf dem kapazitiven Flächensensor durch die erste elektrisch leitfähige Struktur und die zweite elektrisch leitfähige Struktur festgelegt. Es kann im Sinne der Erfindung ferner bevorzugt sein, dass ein Teilen oder Trennen der elektrisch leitfähigen Grundstruktur durch eine oder mehrere der folgenden Maßnahmen erfolgt:
a) das Öffnen einer Verpackung oder das Abreißen eines Kontrollstreifens oder
b) das Abziehen eines Etikettes oder eines Labels, welches sich beim Abziehen in mindestens zwei Teile teilt oder de-laminiert.

Diese Maßnahmen stellen im Sinne der Erfindung bevorzugt Veränderungen dar, mit denen die erste elektrisch leitfähige Struktur in die zweite elektrisch leitfähige Struktur überführt werden kann. Vorzugsweise führen die die genannten Maßnahmen dazu, dass sich die Anordnung, Abstände und/oder charakteristischen Positionen der ersten leitfähigen Struktur so verändern, dass eine zweite elektrisch leitfähige Struktur erhalten wird, die dazu eingerichtet ist, ein anderes Signal auf dem Flächensensor hervorzurufen beziehungsweise festzulegen als die erste elektrisch leitfähige Struktur. Es ist im Sinne der Erfindung bevorzugt, dass die Vorrichtung mit der Verpackung, dem Kontrollstreifen, dem Etikett und/oder dem Label verbunden vorliegt beziehungsweise, dass die genannten Gegenstände Teil der Vorrichtung und/oder des Systems sind.

In einer weiteren bevorzugten Ausführungsform der Erfindung erfolgt das selektive und/oder lokale Entfernen von elektrisch leitfähigem Material mittels Laser, Perforieren, Abziehen oder mechanischem Abrieb, zum Beispiel durch eine Münze, einen Kratzstift, einen Radiergummi oder einen anderen festen Gegenstand. Insbesondere ist es in dieser Ausführungsform der Erfindung bevorzugt, dass die Elemente der elektrisch leitfähigen Grundstruktur mindestens teilweise entfernt oder unterbrochen werden und/oder die Elemente der elektrisch leitfähigen Struktur durch das Entfernen einer elektrisch leitfähigen Deckschicht freigelegt werden. Auch das Entfernen von Teilen der elektrisch leitfähigen Grundstruktur oder einer elektrisch leitfähigen Deckschicht kann mit Hilfe eines Stiftes erfolgen, der beispielsweise dazu eingerichtet ist, ein Material zu applizieren, welches die Eigenschaften der elektrisch leitfähigen Schicht ändert und vergleichbar mit einem Tintenkiller oder Tintenlöscher ist. Es ist in einer Ausführungsform bevorzugt, dass die elektrisch leitfähige Schicht zum Beispiel durch ein solches Material angelöst und mindestens teilweise entfernt wird. Es kann auch bevorzugt sein, dass ein solches Material zu einer deutlichen Verringerung der elektrischen Leitfähigkeit führt.

In einer Ausgestaltung der Erfindung ist es bevorzugt, dass die Kombination von mindestens zwei elektrisch leitfähigen Grundstrukturen durch eine oder mehrere der folgenden Maßnahmen erfolgen kann:
a) irreversible Verfahren, wie Kleben, Tackern und/oder Verschweißen,
b) reversible Verfahren, wie formschlüssige Verbindung, Puzzle, Kleben mit wieder (ab)lösbarem Kleber und/oder Zusammenfügen.

In einer weiteren Ausgestaltung der Erfindung ist es bevorzugt, dass die Dimensionsveränderung der elektrisch leitfähigen Grundstruktur durch die Einwirkung von Umgebungseinflüssen, wie mechanische Belastung, Zug, Druck, Temperatureinwirkung oder Feuchteeinwirkung verursacht wird. Beispielsweise kann das Substratmaterial und somit auch die elektrisch leitfähige Struktur mit Wärme behandelt werden, wodurch beispielsweise ein Schrumpfen des Substrats und/oder der Struktur beziehungsweise ihrer Einzelelemente bewirkt werden kann. Es kann im Sinne der Erfindung auch bevorzugt sein, die Vorrichtung mit der elektrisch leitfähigen Struktur einer Flüssigkeit, zum Beispiel Wasser, auszusetzen, wodurch quellfähige Bestandteile des Materials, aus dem die elektrisch leitfähige Struktur besteht, aufquellen. Dadurch kann vorzugsweise die äußere Gestalt der gesamten elektrisch leitfähigen Struktur oder die äußere Gestalt der Einzelelemente der elektrisch leitfähigen Struktur geändert werden. Es kann im Sinne der Erfindung auch bevorzugt sein, Veränderungen an dem Substrat, das heißt bevorzugt an der Vorrichtung vorzunehmen, so dass die Vorrichtung selbst zum Beispiel ihre Form ändert, wodurch bevorzugt auch eine Änderung der Form und/oder Dimensionierung der elektrischen leitfähigen Struktur einhergehen kann.

In einer weiteren bevorzugten Ausführungsform der Erfindung werden zum selektiven und/oder lokalen Auftragen einer zusätzlichen elektrisch leitfähigen Schicht, Materialien mit zeitlich veränderlichen Eigenschaften verwendet. Das bedeutet im Sinne der Erfindung bevorzugt, dass das elektrisch leitfähige Material ein Material mit einer zeitlich veränderlichen elektrischen Leitfähigkeit umfasst. Das bedeutet im Sinne der Erfindung, dass das Material, welches die zusätzliche elektrisch leitfähige Schicht bildet, zeitlich veränderliche Eigenschaften aufweist, insbesondere in Bezug auf seine elektrischen Leitfähigkeits-Eigenschaften. Dies kann beispielsweise mit einer elektrisch leitfähigen Tinte realisiert werden, die weitere Bestandteile umfasst, die sich mit der Zeit aus dem Material verflüchtigen, wodurch sich beispielsweise die Zusammensetzung und/oder Beschaffenheit oder sonstige Eigenschaften des zurückbleibenden Material verändern können. Es ist in manchen Ausführungsformen der Erfindung bevorzugt, die elektrisch leitfähige Grundstruktur als erste elektrisch leitfähige Schicht zu bezeichnen. Es ist ferner in manchen Ausführungsformen der Erfindung bevorzugt, die zweite elektrisch leitfähige Struktur als zweite elektrisch leitfähige Schicht zu bezeichnen.

### Ausführungsbeispiele der Erfindung:

### "Beschreibbarer" Speicher (Hinzufügen einer zweiten elektrisch leitfähigen Struktur)

Der Begriff "beschreibbar" kann für diese bevorzugte Ausführungsform der Erfindung bevorzugt im wahrsten Sinne des Wortes verstanden werden. Die Vorrichtung, die in diesem Ausführungsbeispiel bevorzugt als Datenspeicher bezeichnet wird, umfasst vorzugsweise eine elektrisch leitfähige Schicht, die in einer Grundstruktur vorliegt. Dies kann zum Beispiel eine generische Gitterstruktur mit definierten Unterbrechungen sein oder eine Struktur umfassend mehrere gleichförmige Einzelelemente, die beispielsweise in regelmäßigen Abständen angeordnet sein können.

In einer weiteren bevorzugten Ausführungsform kann es sich auch um eine konkrete Code-Struktur handeln, das heißt durch Anordnung, elektrische Leitfähigkeit, Form, Größe und Abstand der Einzelelemente der elektrisch leitfähigen Struktur ist eine bestimmte Information oder ein bestimmter Identifikator im Datenspeicher kodiert. Diese Grundstruktur legt auf einem kapazitiven Flächensensor ein Referenzsignal fest. In einem konkreten Ausführungsbeispiel kann die elektrisch leitfähige Grundstruktur ein zeitabhängiges Signal in Form einer geraden Linie auf dem kapazitiven Flächensensor festlegen. Durch das lokale nachträgliche Auftragen einer zweiten elektrisch leitfähigen Schicht, welche die elektrisch leitfähige Grundstruktur mindestens teilweise überlappt, entsteht eine neue resultierende elektrisch leitfähige Struktur. Diese resultierende elektrisch leitfähige Struktur legt im Vergleich zum Referenzsignal ein verändertes zeitabhängiges Signal auf dem kapazitiven Flächensensor fest.

Das nachträgliche lokale Auftragen einer weiteren elektrisch leitfähigen Schicht auf die Vorrichtung kann zum Beispiel mittels eines Stiftes mit elektrisch leitfähiger Tinte, Farbe oder Lack erfolgen. In einem weiteren Ausführungsbeispiel der Erfindung kann die Vorrichtung auch mittels weiterer Applikatoren, z.B. Dispenser, Plotter, Stempel, Spray beziehungsweise Sprühfarben, Pinsel oder anderen Zeichengeräten verändert werden, indem die genannten Applikatoren dazu verwendet werden, nachträglich elektrisch leitfähiges Material auf die Vorrichtung zu applizieren. Auch Druckverfahren, z.B. Inkjetdruck, digitaler Offsetdruck, Elektrofotografie, Siebdruck, Thermotransferdruck, Flexodruck, Offsetdruck, Tiefdruck oder andere selektive Beschichtungsverfahren, sind geeignet zusätzliches elektrisch leitfähiges Material zu applizieren. Die nachträglich applizierte zweite elektrisch leitfähige Schicht kann unter oder auf die Vorrichtung appliziert werden, wobei die Vorrichtung beispielsweise von einem kartenähnlichen Objekt gebildet werden kann. In einer weiteren Ausführungsform kann die weitere elektrisch leitfähige Schicht auch auf einem zweiten Substrat oder auf der Rückseite der Vorrichtung appliziert werden. Die Markierung beziehungsweise das nachträglich applizierte elektrisch leitfähige Material kann mit dem Stift beispielsweise in unterschiedlichen Strichstärken erfolgen. In Abhängigkeit der Gestaltung der Grundstruktur können mittels unterschiedlicher Strichstärken der nachträglich applizierten Markierung verschiedene zeitabhängige Signale auf dem Flächensensor festgelegt werden.

Geeignete elektrisch leitfähige Materialien im Sinne der Erfindung umfassen elektrisch leitfähige Farben, Lacke oder Tinten auf Basis von metallischen Leitern, beispielsweise Kupfer-, Gold oder Silberformulierungen, kohlenstoff- oder rußbasierte Materialien, Materialien die Kohlenstoffnanoröhrchen, Graphit, Graphen, elektrisch leitfähigen Polymeren, beispielsweise PEDOT, und/oder halbleitende Mischoxide, beispielsweise Indium-Zinn-Oxid oder Antimon-Zinn-Oxid, enthalten.

In einer bevorzugten Ausführungsform liegt die Grundstruktur offen vor und die zweite elektrisch leitfähige Schicht geht eine galvanische Verbindung mit der ersten elektrisch leitfähigen Schicht ein, das heißt im Sinne der Erfindung bevorzugt, dass Elemente der Grundstruktur elektrisch miteinander verbunden beziehungsweise überbrückt werden. Der Begriff "offen" bedeutet im Sinne der Erfindung bevorzugt, dass die Struktur in diesem Fall nicht durch eine zusätzliche Deckschicht abgedeckt vorliegt.

In einer weiteren bevorzugten Ausführungsform liegt die Grundstruktur verdeckt vor, das heißt die erste elektrisch leitfähige Struktur ist zum Beispiel durch eine Lackschicht und/oder Farbschicht und/oder ein zusätzliches Laminatmaterial, zum Beispiel Papier oder Folie, abgedeckt. In diesem Fall steht die zweite elektrisch leitfähige Schicht in kapazitiver Wechselwirkung mit der ersten elektrisch leitfähigen Schicht. Die Einzelelemente können kapazitiv miteinander verbunden werden. Die resultierende Struktur legt vorzugsweise ein vom Referenzsignal abweichendes Signal auf dem kapazitiven Flächensensor fest.

Der Vorgang des nachträglichen Beschreibens kann beispielsweise mehrfach erfolgen. Mit jedem Schreibvorgang wird das resultierende Signal weiter verändert. Somit können der Vorrichtung Statusinformationen zugeordnet werden, die im Laufe von Verarbeitungsprozessen angepasst und weiter verändert werden können. Dem Datenträger können im Laufe des Lebenszyklus immer neue Statusinformationen hinzugefügt werden.

In einer bevorzugten Ausführungsform kann die zweite elektrisch leitfähige Schicht beliebig frei angeordnet werden. Anwendungen für diese Ausführungsform sind zum Beispiel Grußkarten und individualisierte Dokumente. In einer weiteren Ausführungsform ist es bevorzugt, nur bestimmte vorgegebene Stellen nachträglich zu bemalen, zu markieren und/oder zu beschreiben. Diese können beispielsweise auf der Vorrichtung vorgegeben sein. Ein Anwendungsbeispiel dafür sind beispielsweise Formulare mit festgelegten Feldern, Multiple-Choice-Test, Checklisten oder dergleichen.

In einer bevorzugten Ausführungsform kann ein kapazitiver Datenspeicher, das heißt bevorzugt die Vorrichtung, durch eine Markierung aktiviert oder deaktiviert werden. Diese Markierung kann zum Beispiel mit einem Stift erfolgen. Ist der kapazitive Datenspeicher als Label beziehungsweise Etikett ausgeführt, kann diese Markierung unter oder über dem Label appliziert werden. In einem konkreten Beispiel kann ein Dokument mit einem Stift markiert werden und nachträglich ein Label mit elektrisch leitfähiger Struktur appliziert werden.

In einer weiteren bevorzugten Ausführungsform kann die Vorrichtung des vorgeschlagenen Systems nachträglich mittels eines Stiftes mit elektrisch leitfähigem Material unterschrieben werden. Die Vorrichtung mit Unterschrift legt ein gegenüber dem zeitabhängigen Referenzsignal verändertes zeitabhängiges Signal fest. In Abhängigkeit der Gestalt und Ausführung der Unterschrift weist das resultierende zeitabhängige Signal einen individuellen Anteil auf, der zum Zwecke des Manipulationsschutzes eingesetzt werden kann. Diese Art der Individualisierung kann beispielsweise zur erstmaligen Aktivierung der Vorrichtung eingesetzt werden. Neben der bekannten optischen Prüfung von Unterschriften ermöglicht das vorgeschlagene System zusätzlich eine elektronische Prüfung, da jede Unterschrift ein individuelles zeitabhängiges Signal festlegt.

In einer bevorzugten Ausführungsform legt die elektrisch leitfähige Grundstruktur ein zeitabhängiges Referenzsignal auf dem kapazitiven Flächensensor fest. In dieser Ausführungsform werden Markierungen in Form von Kreuzen oder anderen Symbolen beziehungsweise Zeichen nachträglich durch einen elektrisch leitfähigen Stift oder einen weiteren Druckvorgang appliziert. Diese zweite elektrisch leitfähige Schicht überlappt mindestens teilweise mit der elektrisch leitfähigen Grundstruktur. Die resultierende elektrisch leitfähige Struktur legt auf dem kapazitiven Flächensensor ein verändertes elektrisch leitfähiges Signal fest.

Eine solche Grundstruktur kann für verschiedene Arten von Dokumenten, Formularen, Spielen und so weiter angepasst werden. Diese Dokumente, Formulare und/oder Spiele bilden vorzugsweise die Vorrichtung im Sinne der Erfindung. Grundsätzlich kann für jede Art von Vordruck mit mehr oder weniger fest definierten Eingabebereichen, das heißt Bereichen, in denen das nachträgliche Auftragen einer zweiten elektrisch leitfähigen Schicht gewünscht ist, eine passende Grundstruktur entwickelt und bereitgestellt werden.

Anwendungen für diese Ausführungsform sind zum Beispiel Spiele, Lotterielose, Bingo, "Schiffe versenken", Gutscheinkarten mit bestimmtem Wert etc. Auch Anwendungen in der Qualitätssicherung, zum Beispiel die Dokumentation von Prüfprozessen durch Abstreichen bestimmter Felder beim Durchlaufen bestimmter Prüfungen, Zählbogen, Formulare, Inventurlisten, automatisierte Auswertung von Fragebogen oder Tests und so weiter sind mögliche Anwendungen für diese Ausführungsform der Erfindung. Ein Dokument kann innerhalb seines Lebenszyklus einfach oder mehrfach verändert beziehungsweise angepasst werden.

Im Vergleich zum Stand der Technik ergeben sich folgende Vorteile:
- Gegenüber Markierung mittels klassischer Stifte und Erkennung mittels OCR-Technologien (optische Zeichenerkennung) ist die Kopiersicherheit, sowie die Manipulationssicherheit ein wichtiges Abgrenzungsmerkmal. Diese sind bei der vorliegenden Erfindung deutlich erhöht im Vergleich zu den Vorrichtungen und Systemen, die aus dem Stand der Technik bekannt sind.
- Barcodes und 2D-Barcodes sind - anders als die vorliegenden Erfindung - durch Benutzer selbst gar nicht veränderbar. Es kann nur ein neuer Code appliziert werden. Auch hier ist keine Kopier- und Manipulationssicherheit gegeben.
- Der Inhalt von Funketiketten (RFID, NFC) lässt sich nur mit speziellen Geräten nachträglich verändern. Das ist sehr aufwändig und daher keine praxisnahe Variante.
- Gegenüber den aus dem Stand der Technik bekannten statischen kapazitiven Datenträgern ist die bevorzugte Ausgestaltung der elektrisch leitfähigen Struktur nachträglich veränderbar und auf kapazitiven Flächensensoren auslesbar.

Durch das vorgeschlagene Beschreiben eines kapazitiven Datenträgers mittels eines Stiftes mit elektrisch leitfähiger Farbe kann auf dem Dokument oder Objekt eine permanente, vorteilhafterweise nicht wieder löschbare und kopiersichere Markierung hinzugefügt werden. Das handschriftliche Beschreiben direkt auf dem Dokument ohne spezielle Geräte und Hilfsmittel ist für den Nutzer ein gewohnter und schneller Vorgang und der Umgang beziehungsweise der Arbeitsablauf mit Dokumenten in Form von Stift und Papier ändert sich an sich nicht. Damit wird insbesondere ein benutzerfreundliches System bereitgestellt, das keine Vorkenntnisse mit elektronischen Vorrichtungen voraussetzt und dadurch beispielsweise auch von älteren Menschen, die der Anwendung von modernen Technologien zuweilen ängstlich oder ablehnend gegenüberstehen, erstaunlich gut angenommen wird.

In einer weiteren bevorzugten Ausführungsform kann eine regelmäßige elektrisch leitfähige Grundstruktur auch nachträglich mittels Inkjektdruck oder anderen Druckverfahren individualisiert oder sogar serialisiert werden. Dies kann durch das nachträgliche Verbinden von elektrisch leitfähigen Elementen oder durch das Erweitern (Verlängern) von elektrisch leitfähigen Elementen realisiert werden.

Anwendungen dieser Ausführungsform der Erfindung sind die Kennzeichnung von Dokumenten und/oder Produkten für Identifikationszwecke, zur Rückverfolgung von Dokumenten/Produkten, Track-and-Trace-Anwendungen, Markieranwendungen, Authentifizierung von Dokumenten/Produkten, Serialisierung von Dokumenten/Produkten sowie Kopierschutz von Dokumenten ohne darauf beschränkt zu sein.

In einer weiteren Ausführungsform können elektrisch leitfähige Materialien mit zeitlich veränderlichen Eigenschaften nachträglich zum Beispiel mittels Stift aufgetragen werden. Damit können temporäre beziehungsweise nicht permanente Änderungen vorgenommen werden und somit auch temporär beziehungsweise nicht permanent andere Signale auf dem kapazitiven Flächensensor erzeugt werden.

Diese Ausführungsform ermöglicht eine temporäre Kennzeichnung von Dokumenten und/oder Produkten. Geeignete Materialien erlangen ihre volle elektrische Leitfähigkeit erst nach einiger Zeit, wenn bestimmte Trocknungs-/Sinterparameter vorliegen. Somit kann in Abhängigkeit von Temperatur, Luftfeuchte und weiteren Umgebungsbedingungen die Zeit zur Erlangung der Ziel-Leitfähigkeit beeinflusst beziehungsweise gesteuert werden. Umgekehrt gibt es Materialien, deren elektrische Leitfähigkeit unter Einfluss von Temperatur und Luftfeuchte nachlässt. Im Sinne der Erfindung bedeutet dies, dass die mittels Stift veränderte elektrisch leitfähige Struktur nach ausreichender Exposition bei bestimmten Umweltparametern wieder das Referenzsignal auf einem kapazitiven Flächensensor erzeugt, da die Leitfähigkeit der zweiten elektrisch leitfähigen Schicht durch die Umwelteinflüsse soweit reduziert wurde, dass die verändernde Wirkung der zweiten elektrisch leitfähigen Schicht auf das Signal auf dem kapazitiven Flächensensor nach einiger Zeit abgeklungen ist.

Um ein Sicherheitslevel der Vorrichtung zu erhalten, ist es im Sinne der Erfindung bevorzugt, das nachträglich aufgetragene elektrisch leitfähige Material zusätzlich mit sogenannten Taggants auszustatten. Der Begriff "Taggant" beschreibt im Sinne der Erfindung bevorzugt solche Stoffe und/oder Elemente, die zur Markierung beispielsweise in Kunststoffen, Tinten, Farben, Lacken, Spray, Klebstoffen, Pulvern, Sicherheitsfäden, Folien, Papier, Etiketten, aber auch Sprengstoffen oder anderen Materialien zugegeben werden können. Es ist bevorzugt, dass die Marker-Materialien chemisch gelöst oder in Form von Partikeln vorliegen und/oder in das jeweilige Produkt integriert sein können. Taggants können vorzugsweise in folgenden Gebieten eingesetzt werden: Banknotenauthentifizierung, Steuermarkenauthentifizierung, Markenschutz, Kennzeichnung von Zigarettenverpackungen, alkoholischen Produkten, pharmazeutischen Produkten, aber auch von Konsumgütern des täglichen Bedarfs, sowie Baustoffen und Halbzeugen.

Taggants werden vorzugsweise mit Hilfe von speziellen Lesegeräten identifiziert und/oder authentifiziert. Sie können für das menschliche Auge sichtbar oder unsichtbar sein. Die Funktionsweise der bevorzugt speziell entwickelten Lesegeräte basiert auf optischen und/oder akustischen Verfahren oder analysiert das Material auf molekularer Ebene. Es kommen zum Beispiel spektrale Lesegeräte, Lesegeräte basierend auf Laser, UV-Licht oder anderen spezifischen Wellenlängen, akustische Messgeräte oder auch Mikroskope zum Einsatz.

Im Sinne dieser Erfindung ist es besonders überraschend, dass die leitfähige Struktur, sowie deren nachträgliche Veränderung die Funktionsweise solcher Taggants nicht beeinträchtigen. Durch die Integration von Taggants in das nachträglich aufgetragene elektrisch leitfähige Material kann vorteilhafterweise ein zusätzliches Sicherheitslevel für die Anwendung eingeführt werden. Die nachträgliche Modifikation durch Auftragen von zusätzlichem elektrisch leitfähigem Material bewirkt vorzugsweise ein zweites Signal auf dem kapazitiven Flächensensor. Gleichzeitig kann das zusätzlich aufgetragene elektrisch leitfähige Material mit Hilfe der Taggants und geeigneten Lesegeräten identifiziert werden, um somit die Authentizität des Materials, welches beispielsweise in Form einer Tinte in einem Stift oder als Druckfarbe verwendet wird, nachzuweisen. Die Kombination der elektrischen Leitfähigkeit des Materials sowie der beinhaltenden Taggants im Material erhöht die Kopiersicherheit nochmals und bietet einen zusätzlichen Manipulationsschutz für sicherheitsrelevante Anwendungen.

### Entfernen der elektrisch leitfähigen Schicht oder einer zweiten elektrisch leitfähigen Deckschicht:

In einer bevorzugten Ausführungsform liegt eine elektrisch leitfähige Struktur vor, die mit einer zweiten elektrisch leitfähigen Deckschicht mindestens teilweise abgedeckt ist.

Diese Struktur wird als elektrische leitfähige Grundstruktur bezeichnet. Durch das Entfernen dieser Deckschicht wird die darunterliegende resultierende Struktur freigelegt.

In einer bevorzugten Ausführungsform wird die Vorrichtung von einem kartenähnlichen Objekt gebildet, wobei die Vorrichtung eine elektrisch leitfähige Struktur umfasst. Auf dieser Struktur befindet sich partiell eine elektrisch leitfähige Deckstruktur. In diesem Zustand erzeugt diese Karte bei Auflegen auf einem kapazitiven Flächensensor und dynamischer Eingabe auf der Vorrichtung durch ein Eingabemittel ein zeitabhängiges Signal in Form einer geraden Linie.

Nachdem die elektrisch leitfähige Deckstruktur entfernt wurde, liegt auf dem kartenähnlichen Objekt eine elektrisch leitfähige resultierende Struktur vor. In diesem Zustand erzeugt diese Karte bei Auflegen auf einem kapazitiven Flächensensor und dynamischer Eingabe auf der Vorrichtung durch ein Eingabemittel ein verändertes zeitabhängiges Signal, welches gegenüber dem Referenzsignal abgelenkt ist. Die dynamische Bewegung des Eingabemittels, wie zum Beispiel einem Finger oder einem Stift, auf dem kartenähnlichen Objekt oder der Vorrichtung verursacht das zeitabhängige Signal auf dem kapazitiven Flächensensor.

Anwendungen dieser Ausführungsform können zum Beispiel Rubbellose oder jegliche Dokumente sein, bei denen eine Aktivierung durch den Nutzer erwünscht ist. Weitere Anwendungsmöglichkeiten dieser Ausführung liegen in der PIN-Sicherung sowie im Manipulationsschutz von Zugangsdaten und Authentifizierungskennungen, ohne darauf beschränkt zu sein. So können zum Beispiel elektronische PIN-Codes zur Nutzer-Authentifizierung, zur SIM-Karten Aktivierung, PIN-Codes für Bankkarten oder Codes zur Aktivierung von Nutzerkonten vor Manipulationen oder unerwünschtem Ausspähen geschützt werden. In dieser Anwendung kann die PIN oder Zugangsnummer mittels der elektrisch leitfähigen Struktur codiert sein und durch eine Decklage abgedeckt sein. Erst nach Entfernen der Decklage oder Deckschicht lässt sich die PIN mit Hilfe des Eingabemittels auf den kapazitiven Flächensensor übertragen. Die Ausführung der Decklage umfasst eine elektrisch leitfähige Schicht, einlagige oder mehrlagige elektrisch leitfähige Etiketten, Hologramme, holografische Rubbelflächen und mehrdimensionale Hologramme. Dem Fachmann bekannte Hologramme oder holografische Folien sind insbesondere geeignet, da die verwendeten Materialien üblicherweise elektrisch leitfähig sind.

In einer weiteren Ausführungsform wird die elektrisch leitfähige Grundstruktur selbst selektiv und/oder lokal entfernt. Dadurch werden Elemente der Grundstruktur selektiv oder vollständig entfernt beziehungsweise unterbrochen oder anderweitig verändert. Das partielle Entfernen der Grundstruktur kann zum Beispiel durch Lochen, Perforieren, mechanischem Abrieb, Rubbeln, Zerreißen, Zerschneiden, Teilen, Stanzen, Laserablation, Laserschneiden, Oxidation und/oder andere chemische Prozesse der Grundstruktur erfolgen, ohne darauf beschränkt zu sein.

In einer weiteren bevorzugten Ausführungsform erzeugt eine elektrisch leitfähige Grundstruktur bei Auflegen auf einem kapazitiven Flächensensor und dynamischer Eingabe auf der Vorrichtung durch ein Eingabemittel ein zeitabhängiges Signal in Form einer geraden Linie. Nachdem Teile der elektrisch leitfähigen Grundstruktur entfernt wurden, erzeugt diese Karte bei Auflegen auf einem kapazitiven Flächensensor und dynamischer Eingabe auf der Vorrichtung durch ein Eingabemittel ein abgelenktes zeitabhängiges Signal, das im Sinne der Erfindung als moduliertes Signal bezeichnet wird.

### Kombinieren von mindestens zwei elektrisch leitfähigen Grundstrukturen

In einer bevorzugten Ausführungsform werden zwei voneinander unabhängige elektrische leitfähige Grundstrukturen miteinander kombiniert. Zusammen ergeben diese beiden Strukturen eine neue elektrisch leitfähige Struktur und legen ein resultierendes Signal fest, welches sich von den Referenzsignalen der beiden unabhängigen elektrisch leitfähigen Grundstrukturen unterscheidet.

Die Kombination der beiden Grundstrukturen kann beispielsweise irreversibel durchgeführt werden, zum Beispiel durch Kleben, Tackern und/oder Verschweißen. In einer weiteren bevorzugten Ausführungsform kann die Kombination der beiden Grundstrukturen reversibel, zum Beispiel durch formschlüssige Verbindung, Puzzle, Kleben mit wieder ablösbarem Kleber und/oder Zusammenfügen erfolgen.

In einem Ausführungsbeispiel können einzelne Puzzle-Teile mit jeweils eigenen elektrisch leitfähigen Grundstrukturen ausgestattet sein. Durch Kombination ergibt sich eine neue Struktur, die bei Auflegen der Vorrichtung auf dem kapazitiven Flächensensor und dynamischer Eingabe durch ein Eingabemittel einen spezifischen Signalverlauf auf dem kapazitiven Flächensensor erzeugt.

Anwendungen für diese Ausführungsform sind zum Beispiel Puzzle, Spieleanwendungen o.ä.

In einer weiteren bevorzugten Ausführungsform erfolgt die Kombination von mindestens zwei elektrisch leitfähigen Grundstrukturen, indem zwei Etiketten oder Label übereinander geklebt werden. Diese beiden Strukturen ergeben in Kombination eine neue leitfähige Struktur, die im Sinne der Erfindung als zweite elektrisch leitfähige Struktur bezeichnet wird. Da das Eingabemittel in einer bevorzugten Richtung relativ zur elektrisch leitfähigen Struktur bewegt wird, um ein Signal auf dem Flächensensor zu erzeugen, sind die Etiketten entsprechend zueinander auszurichten.

### Teilen der elektrisch leitfähigen Struktur:

Eine bevorzugte Ausführungsform der Erfindung betrifft eine elektrisch leitfähige Grundstruktur, die durch die Nutzung beabsichtigt oder unbeabsichtigt in mindestens zwei Teile geteilt wird. Die mindestens zwei Teile erzeugen jeweils ein im Vergleich zum Referenzsignal unterschiedliches Signal auf dem kapazitiven Flächensensor.

Ein Anwendungsbeispiel betrifft ein Siegel mit elektrisch leitfähiger Grundstruktur, welches auf einer Verpackung angebracht ist. Durch das Öffnen der Verpackung wird das Siegel und die darauf befindliche Grundstruktur in mindestens zwei Teilstrukturen geteilt. Die jeweils resultierenden zeitabhängigen Signale der Teilstrukturen auf dem kapazitiven Flächensensor unterscheiden sich vom Referenzsignal. Anwendungsgebiete dieses Ausführungsbeispiels sind Manipulationsschutz, Erstöffnungsschutz, Versiegelung oder die Bereitstellung von Tamper-Proof Verpackungen.

Eine weitere Ausführungsform betrifft das Abreißen eines Kontrollstreifens, zum Beispiel bei einem Ticket.

Ein weiteres Anwendungsbeispiel ist ein manipulationssicheres Etikett oder Label mit einer elektrisch leitfähigen Grundstruktur. Dieses Label kann auf Dokumenten, Sicherheitsdokumenten oder direkt auf Produkten appliziert werden. In einer bevorzugten Ausführungsform ist das Etikett vorperforiert und teilt sich beim Versuch, das Etikett zu entfernen in mindestens zwei Teile.

In einer weiteren bevorzugten Ausführungsform de-laminiert die elektrisch leitfähige Grundstruktur beim Versuch, das Label/Etikett zu entfernen, das heißt im Sinne der Erfindung bevorzugt, dass die elektrisch leitfähige Grundstruktur zum Teil auf dem Dokument oder Produkt verbleibt und zum Teil abgelöst wird. In beiden beschriebenen Fällen erzeugen die Teile der elektrisch leitfähigen Struktur nach Ablösen des Etiketts ein vom Referenzsignal unterschiedliches dynamisches Signal auf dem kapazitiven Flächensensor.

Es ist im Sinne der Erfindung insbesondere bevorzugt, die Vorrichtung zur Produkt- und/oder Dokumentensicherung einzusetzen.

### Dehnen/Schrumpfen der elektrisch leitfähigen Struktur

In einer weiteren bevorzugten Ausführungsform wird das Substrat und/oder die elektrisch leitfähige Grundstruktur der Vorrichtung durch äußere Einflüsse, zum Beispiel mechanische Belastung, Zugbelastung, Druckbelastung, Temperatureinwirkungen oder Feuchteeinwirkung, gedehnt oder geschrumpft. Die resultierende elektrisch leitfähige Struktur weißt somit veränderte geometrische Dimensionen im Vergleich zur elektrisch leitfähigen Grundstruktur auf. Die resultierende Struktur bewirkt auf dem kapazitiven Flächensensor ein verändertes zeitabhängiges Signal. Eine derartige Vorrichtung kann als Dehnungssensor eingesetzt werden. Bevorzugte Substrate für diese Ausführungsform sind flexible und/oder elastische Materialien, wie zum Beispiel Kunststoffe, Folien oder Textilien.

Bevorzugt können Dehnungen oder Schrumpfungen im Bereich zwischen 10 und 100 % detektiert werden. Höhere Dehnfaktoren können je nach Substratmaterial und elektrisch leitfähigem Material zur partiellen Zerstörung der elektrisch leitfähigen Schicht führen, was eine Bestimmung des Dehnfaktors erschwert beziehungsweise unmöglich macht. Besonders bevorzugt können Dehnungen oder Schrumpfungen im Bereich zwischen 20 und 50% detektiert werden. In diesem Bereich ist in der Regel eine besonders sichere Bestimmung des Dehnfaktors möglich.

In einem bevorzugten Ausführungsbeispiel kann die Ausdehnung von Rollenware beziehungsweise Bahnmaterial während der Ab-/Aufrollung, Umspulung oder Verarbeitung bestimmt werden. Durch die Anordnung eines kapazitiven Flächensensors, zum Beispiel am Rand der Bahnware, kann bei bekannter Bahngeschwindigkeit die Ausdehnung beziehungsweise Schrumpfung des Materials bestimmt werden.

Die beschriebenen Ausführungsformen der Erfindung betreffen insbesondere die verschiedenen Möglichkeiten, eine nachträgliche Veränderung der Vorrichtung vorzunehmen, um von der elektrisch leitfähigen Grundstruktur der Vorrichtung zu der zweiten elektrisch leitfähigen Struktur zu gelangen. Es ist im Sinne der Erfindung bevorzugt, dass die einzelnen Merkmale und Verfahren in jeglicher technisch sinnvollen Art und Weise kombiniert werden können.

Die Erfindung wird im Folgenden anhand der nachfolgenden Figuren näher beschrieben.

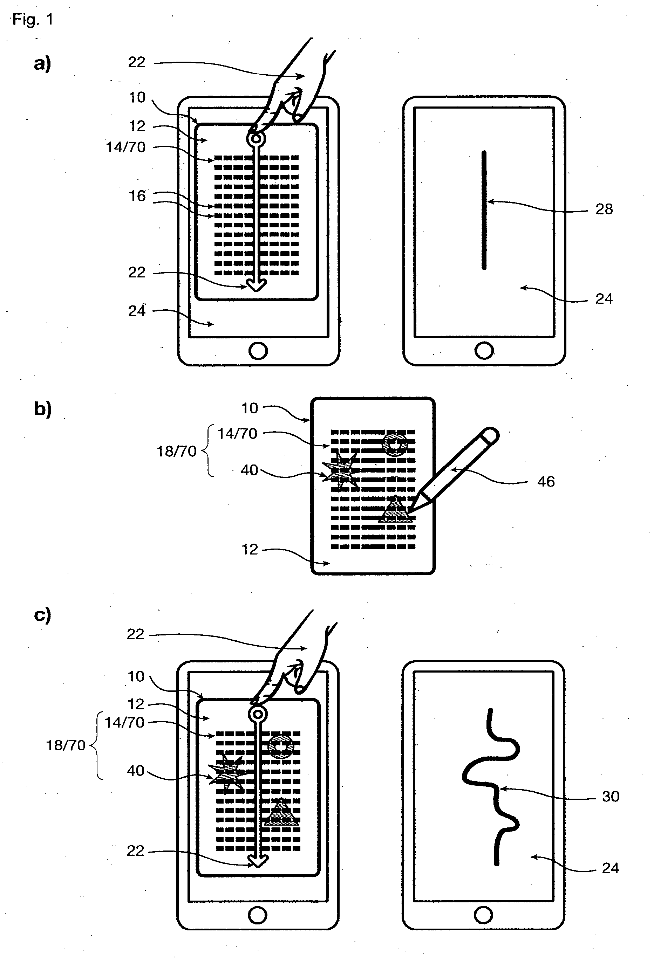

Figur 1a zeigt ein Ausführungsbeispiel der Vorrichtung (10) des vorgeschlagenen Systems, bei der die elektrisch leitfähige Grundstruktur (14) auf dem Substratmaterial (12) angeordnet vorliegt und mehrere Einzelelemente (16) umfasst. Durch die dynamische Eingabe (22) in Form einer linienförmigen Wischgeste (dargestellt durch den Pfeil), die mittels eines Eingabemittels (20) auf der elektrisch leitfähigen Grundstruktur (14) ausgeführt wird, wird auf dem kapazitiven Flächensensor (24) ein zeitabhängiges Referenzsignal (28) in Form einer geraden Linie erzeugt, welches durch die Anordnung, elektrische Leitfähigkeit, Form, Größe und Abstand der Einzelelemente (16) festgelegt wird.

In Figur 1b ist das lokale nachträgliche Auftragen einer zweiten elektrisch leitfähigen Schicht (40) mit Hilfe eines Stiftes mit elektrisch leitfähiger Tinte (46) dargestellt. Durch die zweite elektrisch leitfähige Schicht (40) beziehungsweise Struktur, welche die elektrisch leitfähige Grundstruktur (14) mindestens teilweise überlappt, entsteht eine neue resultierende elektrisch leitfähige Struktur (18) auf der Vorrichtung (10). Die elektrisch leitfähige Grundstruktur (14) und die zweite elektrisch leitfähige Struktur (18) werden als Oberbegriff mit dem Begriff "elektrisch leitfähige Struktur (70)" bezeichnet.

Die resultierende elektrisch leitfähige Struktur (18) erzeugt im Vergleich zum Referenzsignal (28) ein verändertes Signal (30) auf dem kapazitiven Flächensensor (24) durch eine dynamische Eingabe (22) mittels Eingabemittel (20) (Figur 1c).

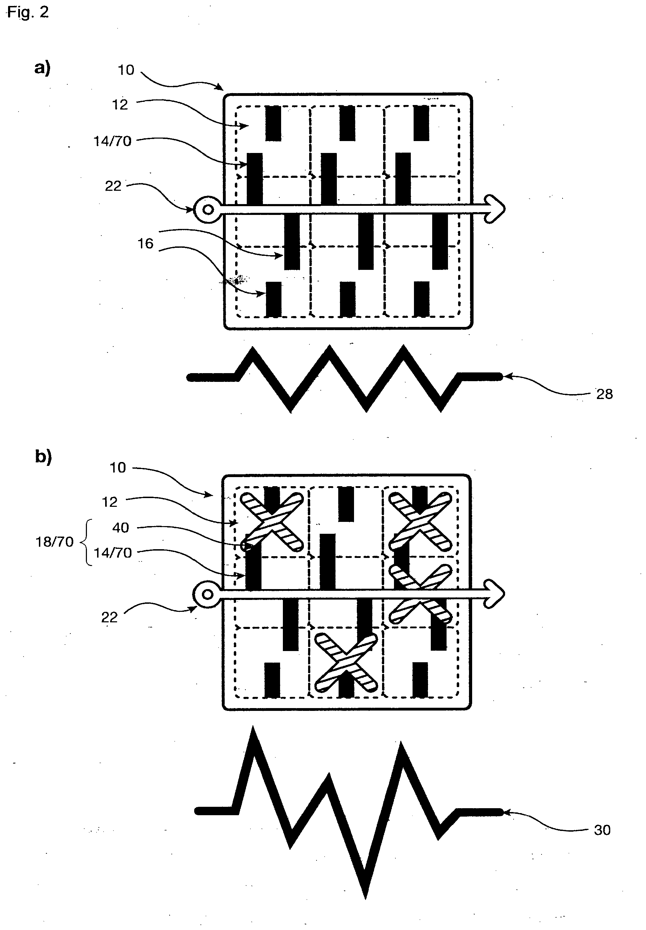

Figur 2a zeigt eine bevorzugte Ausführungsform der Vorrichtung (10) des vorgeschlagenen Systems mit einer regelmäßigen elektrisch leitfähigen Grundstruktur (14), angeordnet auf einem Substrat (12) und umfassend mehrere Einzelelemente (16). Diese Grundstruktur erzeugt bei dynamischer Eingabe (22) mittels Eingabemittel (nicht dargestellt) auf dem kapazitiven Flächensensor (nicht dargestellt) ein zeitabhängiges Referenzsignal (28), das diese Regelmäßigkeit widerspiegelt.

Figur 2b zeigt zusätzliche beispielhafte elektrisch leitfähige Markierungen in Form von Kreuzen (40), die nachträglich durch einen elektrisch leitfähigen Stift (nicht dargestellt) oder einen weiteren Druckvorgang appliziert werden können. Diese zweite elektrisch leitfähige Schicht (40) überlappt mindestens teilweise mit der elektrisch leitfähigen Grundstruktur (14). Die resultierende elektrisch leitfähige Struktur (18) legt auf dem kapazitiven Flächensensor ein verändertes elektrisch leitfähiges Signal (30) fest. Das Einfügen der Kreuze mit einem Stift mit elektrisch leitfähiger Tinte stellt eine nachträgliche Veränderung im Sinne der Erfindung dar, mit der die elektrisch leitfähige Grundstruktur (14) in eine zweite elektrisch leitfähige Struktur (18) umgewandelt wird. Die beiden voneinander verschiedenen elektrisch leitfähigen Strukturen (14 und 18) erzeugen jeweils unterschiedliche elektrische Signale (28 und 30) auf dem Flächensensor (nicht dargestellt).

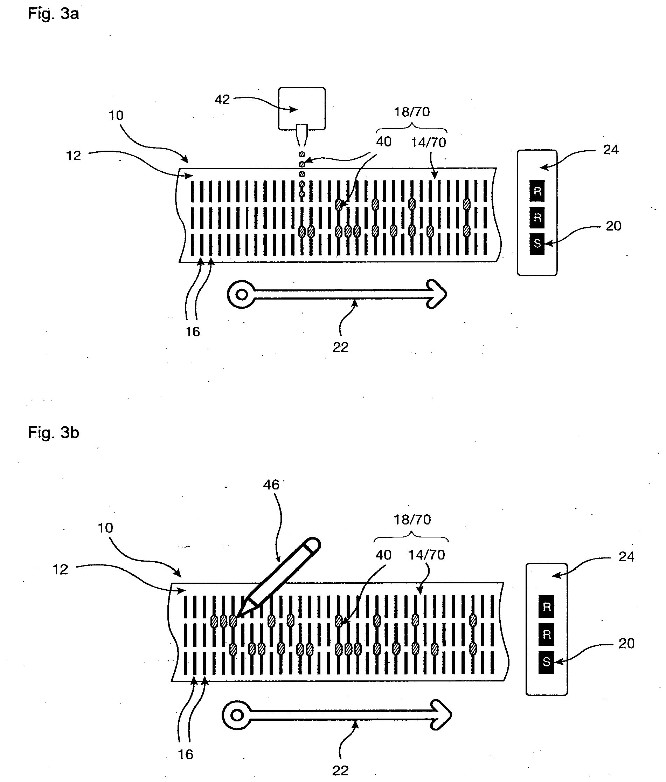

Figur 3a zeigt eine bevorzugte Ausführungsform der Vorrichtung (10) des vorgeschlagenen Systems mit regelmäßiger elektrisch leitfähiger Grundstruktur (14), die auf einem bahnförmigen Substratmaterial (12) angeordnet ist. Die Einzelelemente (16) der elektrisch leitfähigen Struktur sind im vorliegenden Ausführungsbeispiel Elemente gleicher Geometrie (Form) und Größe, die regelmäßig und mit gleichem Abstand zueinander angeordnet sind. Das bahn- oder rollenförmige Substratmaterial (12) mit der elektrisch leitfähigen Grundstruktur (14) bewegt sich in der angegebenen Richtung (22) relativ zu einem Inkjetdrucker (42), der über der sich bewegenden Substratbahn (12) angeordnet ist. Mittels des Inkjetdruckers (42) wird zusätzliches elektrisch leitfähiges Material (40) partiell auf das Substrat (12) aufgetragen. Das zusätzlich aufgetragene elektrisch leitfähige Material (40) überlappt die elektrisch leitfähige Grundstruktur (14) mindestens teilweise und verbindet damit Einzelelemente (16) der elektrisch leitfähigen Grundstruktur (14) und erzeugt somit die resultierende elektrisch leitfähige Schicht (18).

Mit diesem Verfahren kann eine elektrisch leitfähige Grundstruktur (14) nachträglich individualisiert oder sogar serialisiert werden. Der kapazitive Flächensensor (24) ist in diesem Beispiel so ausgelegt, dass eine der Elektroden auf dem Flächensensor als Eingabemittel (20) dient. Diese Elektrode ist in der Zeichnung mit "S" gekennzeichnet, was für Sende-Elektrode steht. Die beiden weiteren dargestellten Elektroden auf dem kapazitiven Flächensensor (24) sind mit "R" gekennzeichnet, was für Reader beziehungsweise Lese-Elektrode steht. Mit Hilfe des schematisch dargestellten kapazitiven Flächensensors wird die individualisierte resultierende elektrisch leitfähige Struktur (18) detektiert. Beim Abrollen des bahnförmigen Substratmaterials (12) bewegt sich die Vorrichtung relativ zum kapazitiven Flächensensor (24) und die resultierende elektrisch leitfähige Struktur (18) kommt nach und nach mit dem Flächensensor (24) in Wirkkontakt. Die Dauer des resultierenden zeitabhängigen Signals (30) wird in diesem Ausführungsbeispiel durch die Dauer der Abrollung festgelegt.

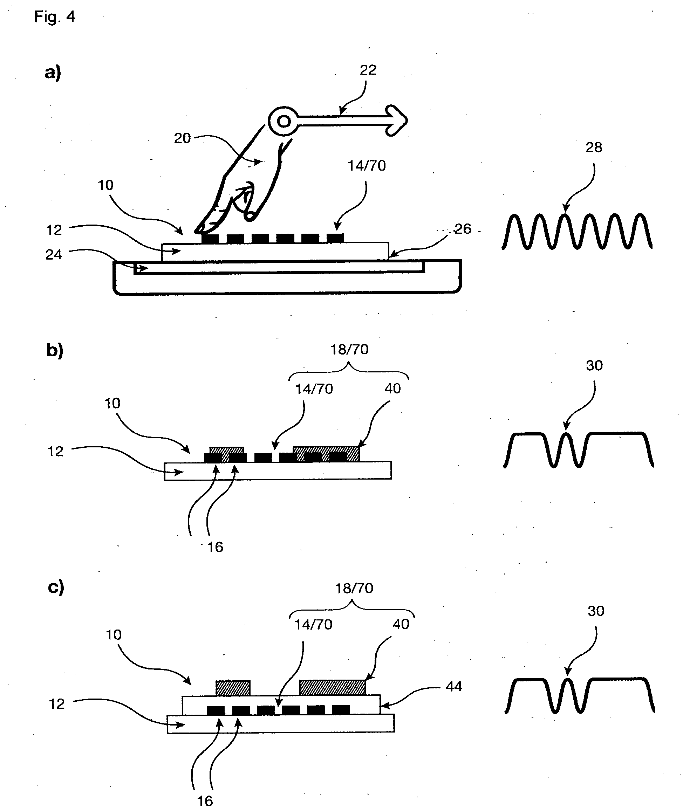

Figur 3b zeigt eine ähnliche Ausführungsform der Vorrichtung (10) des vorgeschlagenen Systems, bei der die nachträgliche Applikation von elektrisch leitfähigem Material (40) mit Hilfe eines Stiftes (46) oder eines anderen geeigneten Applikators, z.B. Dispenser, erfolgt und dieser Applikator lokal elektrisch leitfähiges Material (40) aufträgt, welches die elektrisch leitfähige Grundstruktur (14) mindestens teilweise überlappt und somit eine resultierende elektrisch leitfähige Schicht (18) erzeugt. Der Auslesevorgang mittels kapazitivem Flächensensor (24) erfolgt analog zur Beschreibung in Figur 3a.ln Figur 4 sind zwei verschiedene Varianten zur Applikation des zusätzlichen elektrisch leitfähigen Materials (40) auf dem Substrat (12) mit bereits vorliegender elektrisch leitfähiger Grundstruktur (14) dargestellt.

Figur 4a zeigt eine elektrisch leitfähige Grundstruktur (14), die auf dem Substrat (12) der Vorrichtung (10) des vorgeschlagenen Systems angeordnet ist. Die Vorrichtung (10) und insbesondere die elektrisch leitfähige Struktur (70) steht mit dem kapazitiven Flächensensor (24) in Wirkkontakt (26). Das Eingabemittel (20) wird in einer Relativbewegung (22) über die Vorrichtung (10) und insbesondere über die elektrisch leitfähige Struktur (14/70) bewegt. Dadurch wird auf dem kapazitiven Flächensensor (24) ein zeitabhängiges Signal (28) erzeugt.

Figur 4b zeigt das zusätzliche applizierte elektrisch leitfähige Material (40), welches direkt auf die elektrisch leitfähige Grundstruktur (14) aufgetragen wurde. Dadurch kommt es zu einem direkten galvanischen Kontakt zwischen elektrisch leitfähiger Grundstruktur (14) und zusätzlichem elektrisch leitfähigen Material (40). In dieser Ausführungsform liegt die Grundstruktur (14) offen, das heißt nicht abgedeckt, vor und die zweite elektrisch leitfähige Schicht (40) geht eine galvanische Verbindung mit der ersten elektrisch leitfähigen Schicht (14) ein, das heißt Einzelelemente der Grundstruktur (16) werden elektrisch miteinander verbunden beziehungsweise galvanisch überbrückt. Die somit entstehende resultierende elektrisch leitfähige Schicht (18) erzeugt auf dem kapazitiven Flächensensor (nicht dargestellt) ein resultierendes zeitabhängiges Signal (30), welches sich vorzugsweise vom zeitabhängigen Referenzsignal (28) unterscheidet.

In Figur 4c liegt die elektrisch leitfähige Grundstruktur (14) verdeckt vor, das heißt die erste elektrisch leitfähige Struktur (14) ist zum Beispiel durch eine zusätzliche Farb- oder Laminatschicht (44) abgedeckt. Diese zusätzliche Schicht kann eine Lackschicht und/oder Farbschicht und/oder ein zusätzliches Laminatmaterial, zum Beispiel Papier oder Folie, sein. In diesem Fall steht die zweite elektrisch leitfähige Schicht (40) in kapazitiver Wechselwirkung mit der ersten elektrisch leitfähigen Schicht (14). Einzelelemente (16) können kapazitiv miteinander verbunden werden. Die resultierende elektrisch leitfähige Struktur (18) erzeugt ein vom Referenzsignal (28) abweichendes Signal (30) auf dem kapazitiven Flächensensor (nicht dargestellt).

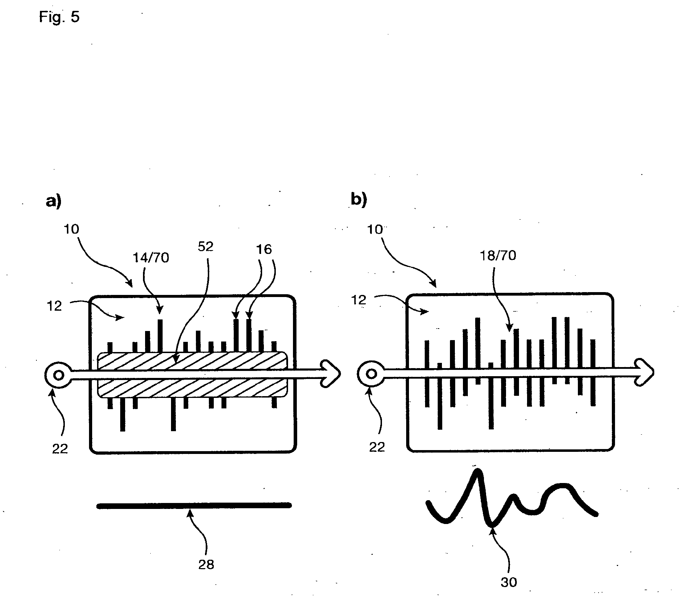

In Figur 5a ist ein kartenähnliches Objekt (10) mit einer elektrisch leitfähigen Struktur (14) dargestellt. Auf dieser Struktur befindet sich partiell eine elektrisch leitfähige Deckstruktur (52, schraffiert dargestellt). In diesem Zustand erzeugt die Karte (10) bei Auflegen auf einem kapazitiven Flächensensor (24, nicht dargestellt), wenn eine dynamische Eingabe von einem Nutzer auf der Vorrichtung unter Verwendung eines Eingabemittels (nicht dargestellt) vorgenommen wird, ein zeitabhängiges Referenzsignal in Form einer geraden Linie (28).

Die Figur 5b zeigt die elektrisch leitfähige resultierende Struktur (18), nachdem die elektrisch leitfähige Deckstruktur (52) entfernt wurde. In diesem Zustand erzeugt diese Karte (10) bei Auflegen auf einem kapazitiven Flächensensor und dynamischer Eingabe auf der Vorrichtung durch ein Eingabemittel ein abgelenktes zeitabhängiges Signal (30), wie in der Grafik dargestellt. Der Pfeil markiert in diesen Abbildungen die Bewegung (22) eines Eingabemittels (nicht dargestellt), wie einem Finger oder einem Stift, auf dem kartenähnlichen Objekt oder der Vorrichtung (10), insbesondere auf der elektrisch leitfähigen Struktur (70).

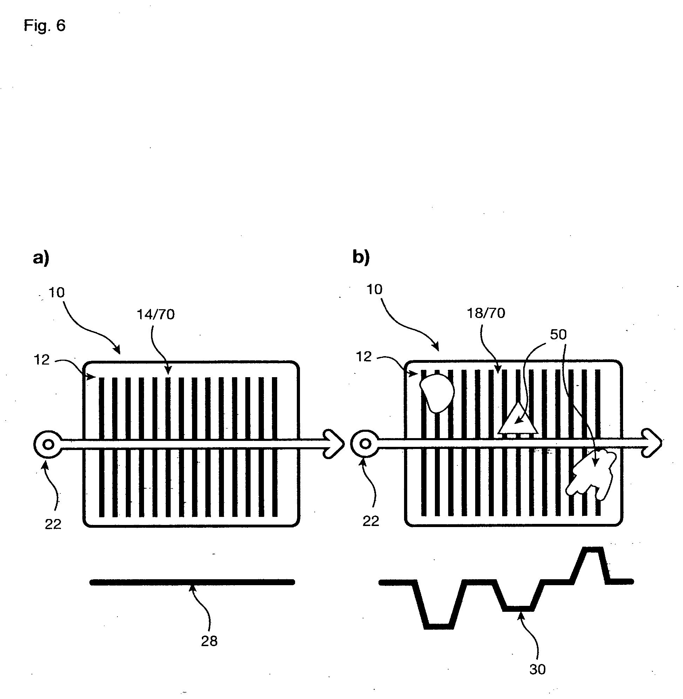

In Figur 6a ist ein kartenähnliches Objekt (10) als Bestandteil des vorgeschlagenen Systems mit einer elektrisch leitfähigen Grundstruktur (14) dargestellt. In diesem Zustand erzeugt diese Karte bei Auflegen auf einem kapazitiven Flächensensor (nicht dargestellt) und dynamischer Eingabe (22) auf der Vorrichtung (10) durch ein Eingabemittel (nicht dargestellt) ein zeitabhängiges Referenzsignal (28) in Form einer geraden Linie.

Die Figur 6b zeigt die resultierende elektrisch leitfähige Struktur (18/70), nachdem Teile der elektrisch leitfähigen Grundstruktur (14) entfernt wurden. Die Unterbrechungen der elektrisch leitfähigen Struktur (50) können beispielsweise herbeigeführt werden durch mechanischen Abrieb, zum Beispiel mit einem Kratzstift oder Radiergummi, oder durch einen Stift, der ein Lösemittel enthält, welches die elektrisch leitfähige Grundstruktur (14) mindestens teilweise anlöst beziehungsweise zerstört. In diesem Zustand erzeugt diese Karte bei Auflegen auf einem kapazitiven Flächensensor und dynamischer Eingabe (22) auf der Vorrichtung (10), insbesondere der elektrisch leitfähigen Struktur (18/70), durch ein Eingabemittel (nicht dargestellt) ein resultierendes abgelenktes zeitabhängiges Signal (30), wie in der Grafik dargestellt.

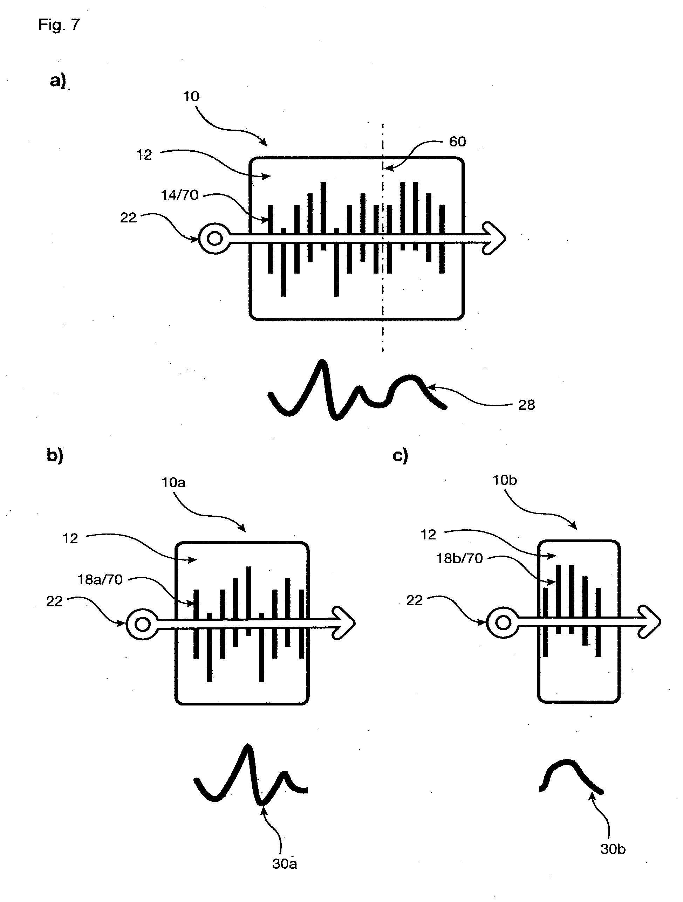

Figur 7a stellt ein kartenförmiges Objekt (10) als Bestandteil des vorgeschlagenen Systems mit einer elektrisch leitfähigen Grundstruktur (14/70) dar. Diese elektrisch leitfähige Grundstruktur (14) erzeugt auf dem kapazitiven Flächensensor (nicht dargestellt) ein zeitabhängiges Referenzsignal (28). Das Substratmaterial (12) ist mit einer Perforation (60) versehen. Nach Abtrennen eines Abschnittes des kartenförmigen Objektes (10) entlang der Perforationslinie liegen zwei Teile des kartenförmigen Objektes (10a und 10b) mit zwei verschiedenen resultierenden elektrisch leitfähigen Strukturen (18a und 18b) vor, die jeweils veränderte resultierende Signale (30a und 30b) auf dem kapazitiven Flächensensor (nicht dargestellt) erzeugen (Figur 7b und c). Anwendungsbeispiele dieser Ausführungsform der Vorrichtung (10) umfassen beispielsweise Tickets, die durch Abreißen entwertet werden können. Ein weiteres Anwendungsbeispiel sind Labels oder Aufkleber zum Schutz von Dokumenten, die sich beim Versuch, das Label abzulösen oder zu manipulieren, entlang der Perforationslinien trennen und somit ein verändertes Signal (30) auf dem kapazitiven Flächensensor (nicht dargestellt) festlegen. Auch als Erstöffnungsschutz oder Originalitätssiegel einer Verpackung kann ein solches Label zum Einsatz kommen. Nach einem Manipulationsversuch oder dem ersten Öffnen einer Verpackung legt die durch den Öffnungs- oder Manipulationsvorgang veränderte elektrisch leitfähige Struktur (18) ein verändertes zeitabhängiges Signal (30) auf dem Flächensensor (nicht dargestellt) fest.

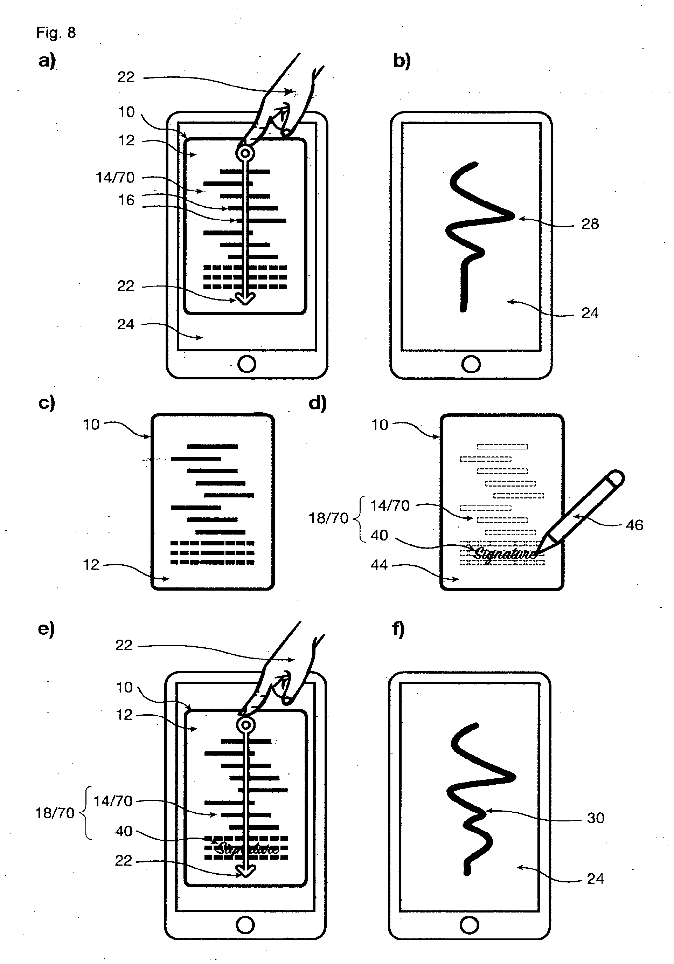

Figur 8a zeigt ein Ausführungsbeispiel der Vorrichtung (10) des vorgeschlagenen Systems, bei der die elektrisch leitfähige Grundstruktur (14) auf dem Substratmaterial (12) angeordnet vorliegt und mehrere Einzelelemente (16) umfasst. Durch die dynamische Eingabe (22) in Form einer linienförmigen Wischgeste (dargestellt durch den Pfeil), die mittels eines Eingabemittels (20) auf der elektrisch leitfähigen Grundstruktur (14) ausgeführt wird, wird auf dem kapazitiven Flächensensor (24) ein zeitabhängiges Referenzsignal (28) erzeugt, welches durch die Anordnung, elektrische Leitfähigkeit, Form, Größe und Abstand der Einzelelemente (16) festgelegt wird (Figur 8b).

Figur 8c zeigt die elektrisch leitfähige Grundstruktur (14) dieser Ausführungsform. Der obere Teil der elektrisch leitfähigen Grundstruktur (14) ist derart gestaltet, dass das durch diesen Teil der elektrisch leitfähigen Struktur festgelegte dynamische Signal (28, oberer Teil) auf dem Flächensensor (24) eine Identifizierung der Vorrichtung (10) ermöglicht. Der untere Teil der elektrisch leitfähigen Grundstruktur (14) liegt in Form einer generischen Gitterstruktur vor, die in diesem Zustand ein dynamisches Signal (28, unterer Teil) in Form einer geraden Linie auf dem Flächensensor (24) festlegt (Figur 8b).

Figur 8d zeigt die eine bevorzugte Ausführungsform der Vorrichtung, die mit einer Lackschicht oder einem Laminat (44) abgedeckt ist. Die elektrisch leitfähige Grundstruktur (14) wird von der Deckschicht oder dem Laminat (44) bedeckt und ist in der Grafik mittels Strichlinie dargestellt. Auf der Deckschicht oder dem Laminat (44) wird nachträglich lokal elektrisch leitfähiges Material (40) mit Hilfe eines Stiftes mit elektrisch leitfähiger Tinte (46) strukturiert aufgetragen. Die elektrisch leitfähige Grundstruktur (14) sowie die zweite elektrisch leitfähige Schicht (40) sind somit nicht galvanisch verbunden, sondern stehen miteinander in kapazitiver Wechselwirkung. In dieser Ausführungsform liegt das elektrisch leitfähige Material (40) in Form eines Schriftzuges beziehungsweise einer Unterschrift vor und überlappt den unteren Bereich der elektrisch leitfähigen Grundstruktur (14). Aus der Kombination der elektrisch leitfähigen Grundstruktur (14) und dem zusätzlich applizierten elektrisch leitfähige Material (40), welches die elektrisch leitfähige Grundstruktur (14) mindestens teilweise überlappt, entsteht eine neue resultierende elektrisch leitfähige Struktur (18) auf der Vorrichtung (10).

Figur 8e zeigt eine bevorzugte Ausführungsform der resultierenden elektrisch leitfähigen Struktur (18) auf der Vorrichtung. Zur besseren Übersichtlichkeit wurde in Figur 8e auf die Darstellung der Deckschicht (44) verzichtet. Die elektrisch leitfähige Grundstruktur (14) und die zweite elektrisch leitfähige Struktur (18) werden als Oberbegriff mit dem Begriff "elektrisch leitfähige Struktur (70)" bezeichnet. Die resultierende elektrisch leitfähige Struktur (18) erzeugt im Vergleich zum Referenzsignal (28) ein verändertes Signal (30) auf dem kapazitiven Flächensensor (24) durch eine dynamische Eingabe (22) mittels Eingabemittel (20). Das veränderte Signal (30) ist in Figur 8f dargestellt und insbesondere im unteren Bereich des Signals gegenüber dem Referenzsignal (28) verändert.

### Bezugszeichenliste

- 10: Vorrichtung
- 12: Substrat
- 14: elektrisch leitfähige Grundstruktur
- 16: Einzelelemente
- 18: resultierende elektrisch leitfähige Struktur
- 20: Eingabemittel
- 22: Relativbewegung
- 24: kapazitiver Flächensensor
- 26: Wirkkontakt zwischen kapazitivem Flächensensor und Vorrichtung
- 28: zeitabhängiges Referenzsignal
- 30: resultierendes zeitabhängiges Signal
- 40: elektrisch leitfähiges Material
- 42: Inkjetdrucker
- 44: Lackschicht oder Laminat
- 46: Stift mit elektrisch leitfähiger Tinte
- 50: Unterbrechungen in der elektrisch leitfähigen Struktur
- 52: Deckstruktur
- 60: Perforation
- 70: elektrisch leitfähige Struktur (Oberbegriff für 14 und 18)

## Patentansprüche

1. System zur Erzeugung eines veränderbaren zeitabhängigen Signals auf einem kapazitiven Flächensensor (24), wobei das System eine Vorrichtung (10) und den kapazitiven Flächensensor (24) umfasst, wobei die Vorrichtung (10) eine erste elektrisch leitfähige Struktur (14) umfasst,
wobei die erste elektrisch leitfähige Struktur (14) durch eine Veränderung der ersten elektrisch leitfähigen Struktur (14) in eine zweite elektrische leitfähige Struktur (18) überführt werden kann,
**dadurch gekennzeichnet, dass**
die erste elektrisch leitfähige Struktur (14) mindestens zwei galvanisch voneinander getrennte Einzelelemente (16) umfasst und dazu eingerichtet ist, bei Vornahme einer dynamischen Eingabe (22) in Form einer Bewegung eines Eingabemittels (20) durch einen Nutzer auf der ersten elektrisch leitfähigen Struktur (14), während die Vorrichtung mit dem kapazitiven Flächensensor in Wirkkontakt steht, ein erstes zeitabhängiges Signal (28) auf dem kapazitiven Flächensensor (24) zu erzeugen, welches durch Anordnung, elektrische Leitfähigkeit, Größe, Abstand und/oder Form der Einzelelemente (16) der ersten elektrisch leitfähigen Struktur (14) bestimmt wird und
wobei die zweite elektrisch leitfähige Struktur (18) mindestens zwei galvanisch voneinander getrennte Einzelelemente (16) umfasst und dazu eingerichtet ist, bei Vornahme einer dynamische Eingabe (22) in Form einer Bewegung des Eingabemittels (20) auf der zweiten elektrisch leitfähigen Struktur (18), während die Vorrichtung mit dem kapazitiven Flächensensor in Wirkkontakt steht, ein zweites zeitabhängiges Signal (30) auf dem kapazitiven Flächensensor (24) zu erzeugen, welches durch Anordnung, elektrische Leitfähigkeit, Größe, Abstand und/oder Form der Einzelelemente (16) der zweiten elektrisch leitfähigen Struktur (18) bestimmt wird.

2. System nach Anspruch 1
**dadurch gekennzeichnet, dass**
das System einen Stift umfasst, welcher dazu eingerichtet ist Veränderungen der ersten elektrisch leitfähigen Struktur (14) zu bewirken, wobei der Stift bevorzugt dazu eingerichtet ist elektrisch leitfähiges Material (40), besonders bevorzugt in Form von elektrisch leitfähiger Tinte, auf die erste leitfähige Struktur aufzutragen oder einen Teil der ersten elektrisch leitfähigen Struktur (14) selektiv zu entfernen.

3. System nach einem der vorherigen Ansprüche
**dadurch gekennzeichnet, dass**
das System dazu eingerichtet ist, dass die Veränderung der ersten elektrisch leitfähigen Struktur (14) bewirkbar ist durch eine oder mehrere der folgenden Maßnahmen
a) Auftragen von elektrisch leitfähigem Material (40),
b) selektives Entfernen eines Teils der ersten elektrisch leitfähigen Struktur (14),
c) Auftragen eines Materials, das dazu eingerichtet ist, Eigenschaften, insbesondere die elektrische Leitfähigkeit, der ersten elektrisch leitfähigen Struktur (14) zu verändern.

4. System nach einem oder mehreren der vorhergehenden Ansprüche
**dadurch gekennzeichnet, dass**
eine Individualisierung der Vorrichtung (10) durch Veränderung der ersten elektrisch leitfähigen Struktur (14) durch eine oder mehrere der folgenden Maßnahmen bewirkbar ist:
a) Auftragen von elektrisch leitfähigem Material (40) mit einem Stift mit elektrisch leitfähiger Tinte,
b) Bedrucken mit elektrisch leitfähigem Material (40) im Inkjetdruckverfahren.

5. System nach einem oder mehreren der vorhergehenden Ansprüche
**dadurch gekennzeichnet, dass**
der kapazitive Flächensensor (24) ein Touchscreen ist.

6. System nach einem oder mehreren der Ansprüche 1 bis 5
**dadurch gekennzeichnet, dass**
ein Teilen oder Trennen der ersten elektrisch leitfähigen Struktur (14) durch
a) das Öffnen einer Verpackung oder das Abreißen eines Kontrollstreifens oder
b) das Abziehen eines Etikettes oder eines Labels, welches sich beim Abziehen in mindestens zwei Teile teilt oder de-laminiert,
bewirkbar ist.

7. System nach einem oder mehreren der Ansprüche 3 oder 4
**dadurch gekennzeichnet, dass**
das elektrisch leitfähige Material (40) ein Material mit einer zeitlich veränderlichen elektrischen Leitfähigkeit umfasst.

8. System nach einem oder mehreren der Ansprüche 1 bis 7
**dadurch gekennzeichnet, dass**
die Einzelelemente (16) der elektrisch leitfähigen Strukturen (14, 18) hinsichtlich Größe, Abstand und Form so dimensioniert sind, dass zu jedem Zeitpunkt der dynamischen Eingabe (22) mindestens zwei Einzelelemente (16) mindestens teilweise mit einem Eingabemittel (20) in Wirkkontakt stehen, wobei die dynamische Eingabe (22) mit dem Eingabemittel (20) bewirkt wird.

9. System nach einem oder mehreren der Ansprüche 1 bis 8
**dadurch gekennzeichnet, dass**
die dynamische Eingabe (22) bezüglich Position, Geschwindigkeit, Richtung, Form, Unterbrechung des Signals, Frequenz und/oder Signalstärke modulierbar ist.

10. System nach einem oder mehreren der Ansprüche 1 bis 9
**dadurch gekennzeichnet, dass**
die erste elektrisch leitfähige Struktur (14) und/oder die zweite elektrisch leitfähige Struktur (18) auf einem elektrisch nicht leitfähigen Substrat (12) vorliegt, wobei das elektrisch nicht leitfähige Substrat (12) auf dem kapazitiven Flächensensor (24) aufliegt, während eine Berührung der ersten elektrisch leitfähigen Struktur (14) und/oder der zweiten elektrisch leitfähigen Struktur (18) durch einen Finger eines Nutzers als Eingabemittel möglich ist.

11. Verfahren zur Erzeugung eines veränderbaren zeitabhängigen Signals auf einem kapazitiven Flächensensor (24),
**umfassend die folgenden Schritte:**
a) Bereitstellung einer Vorrichtung (10) umfassend eine erste elektrisch leitfähige Struktur (14) umfassend mindestens zwei galvanisch voneinander getrennte Einzelelemente (16),
b) Veränderung der ersten elektrisch leitfähigen Struktur (14), wodurch eine zweite elektrisch leitfähige Struktur (18) umfassend mindestens zwei galvanisch voneinander getrennte Einzelelemente (16) erhalten wird,
c) Auflegen der Vorrichtung (10) auf den kapazitiven Flächensensor (24), wobei die zweite elektrisch leitfähige Struktur (18) mit dem kapazitiven Flächensensor (24) mindestens teilweise in einem Wirkkontakt (26) steht,
d) Vornahme einer dynamischen Eingabe (22) in Form einer Bewegung eines Eingabemittels (20) durch einen Nutzer auf der zweiten elektrisch leitfähigen Struktur (18) während die zweite elektrisch leitfähige Struktur (18) mit dem kapazitiven Flächensensor (24) mindestens teilweise in einem Wirkkontakt (26) steht, sodass ein zweites zeitabhängiges Signal (30) auf dem kapazitiven Flächensensor (24) erzeugt wird, welches durch eine räumliche Anordnung, elektrische Leitfähigkeit, Größe, Abstand und/oder Form der Einzelelemente (16) der zweiten elektrisch leitfähigen Struktur (18) auf der Vorrichtung (10) festgelegt wird.

12. Verfahren nach Anspruch 11 **zusätzlich umfassend die folgenden Schritte** zwischen den Schritten a) und b)
a1) Auflegen der Vorrichtung (10) auf den kapazitiven Flächensensor (24), wobei die erste elektrisch leitfähige Struktur (14) mit dem kapazitiven Flächensensor (24) mindestens teilweise in einem Wirkkontakt (26) steht
a2) Vornahme einer dynamischen Eingabe (22) in Form einer Bewegung eines Eingabemittels (20) durch einen Nutzer auf der ersten elektrisch leitfähigen Struktur (14) während die erste elektrisch leitfähige Struktur (14) mit dem kapazitiven Flächensensor (24) mindestens teilweise in einem Wirkkontakt (26) steht, sodass ein erstes zeitabhängiges Signal (28) auf dem kapazitiven Flächensensor (24) erzeugt wird, welches durch eine räumliche Anordnung, elektrische Leitfähigkeit, Größe, Abstand und/oder Form der Einzelelemente (16) der ersten elektrisch leitfähigen Struktur (18) auf der Vorrichtung (10) festgelegt wird.

13. Verfahren nach einem der Ansprüche 11 oder 12
**dadurch gekennzeichnet, dass**
die Veränderung der ersten elektrisch leitfähigen Struktur (14) im Schritt b) bewirkt wird durch eine oder mehrere der folgenden Maßnahmen
a) Auftragen von elektrisch leitfähigem Material (40),
b) selektives Entfernen eines Teils der ersten elektrisch leitfähigen Struktur (14),
c) Auftragen eines Materials, das dazu eingerichtet ist, Eigenschaften, insbesondere die elektrische Leitfähigkeit, der ersten elektrisch leitfähigen Struktur (14) zu verändern.

## Claims

1. A device for generating a variable time-dependent signal on a capacitive surface sensor (24), wherein the device comprises an apparatus (10) and the capacitive surface sensor (24), wherein the apparatus (10) comprises a first electrically conductive structure (14),
wherein the first electrically conductive structure (14) can be converted into a second electrically conductive structure (18) by changing the first electrically conductive structure (14), **characterized in that**
the first electrically conductive structure (14) comprises at least two individual elements (16) which are electrically isolated from one another and is configured, when a dynamic input (22) is performed in the form of a movement of an input means (20) by a user on the first electrically conductive structure (14), while the apparatus is in operative contact with the capacitive surface sensor, to generate a first time-dependent signal (28) on the capacitive surface sensor (24), which is determined by the arrangement, electrical conductivity, size, distance, and/or shape of the individual elements (16) of the first electrically conductive structure (14) and
wherein the second electrically conductive structure (18) comprises at least two individual elements (16) which are electrically isolated from one another and is configured, when a dynamic input (22) is performed in the form of a movement of an input means (20) on the second electrically conductive structure (18), while the device is in operative contact with the capacitive surface sensor, to generate a second time-dependent signal (30) on the capacitive surface sensor (24), which is determined by the arrangement, electrical conductivity, size, distance, and/or shape of the individual elements (16) of the second electrically conductive structure (18).

2. The device according to claim 1
**characterized in that**
the device comprises a pen which is configured to effectuate changes of the first electrically conductive structure (14), wherein the pen is preferably configured to apply electrically conductive material (40), particularly preferably in the form of electrically conductive ink, to the first conductive structure or to selectively remove part of the first electrically conductive structure (14).

3. The device according to any one of the preceding claims
**characterized in that**
the device is configured so that the change of the first electrically conductive structure (14) can be effectuated by one or more of the following measures
a) applying electrically conductive material (40),
b) selectively removing part of the first electrically conductive structure (14),
c) applying a material that is configured to change properties, in particular the electrical conductivity, of the first electrically conductive structure (14).

4. The device according to any one or more of the preceding claims
**characterized in that**
an individualization of the apparatus (10) can be effectuated by changing the first electrically conductive structure (14) by one or more of the following measures:
a) applying electrically conductive material (40) using a pen having electrically conductive ink,
b) printing using electrically conductive material (40) using the inkjet printing process.

5. The device according to any one or more of the preceding claims
**characterized in that**
the capacitive surface sensor (24) is a touch screen.

6. The device according to any one or more of claims 1 to 5
**characterized in that**
dividing or separating the first electrically conductive structure (14) can be effectuated by
a) opening a package or tearing off a control strip or
b) peeling off of a sticker or a label which divides into at least two parts or delaminates when peeled off.

7. The device according to any one or more of claims 3 or 4
**characterized in that**
the electrically conductive material (40) comprises a material having electrical conductivity varying over time.

8. The device according to any one or more of claims 1 to 7
**characterized in that**
the individual elements (16) of the electrically conductive structures (14, 18) are dimensioned in terms of size, distance, and shape such that at any time during the dynamic input (22), at least two individual elements (16) are at least partially in operative contact with an input means (20), wherein the dynamic input (22) is effectuated using the input means (20).

9. The device according to any one or more of claims 1 to 8
**characterized in that**
the dynamic input (22) can be modulated in terms of position, speed, direction, shape, interruption of the signal, frequency, and/or signal strength.

10. The device according to any one or more of claims 1 to 9
**characterized in that**
the first electrically conductive structure (14) and/or the second electrically conductive structure (18) is provided on an electrically non-conductive substrate (12), wherein the electrically non-conductive substrate (12) rests on the capacitive surface sensor (24), while touching the first electrically conductive structure (14) and/or the second electrically conductive structure (18) with a user's finger is possible as an input means.

11. A method for generating a variable time-dependent signal on a capacitive surface sensor (24),
**comprising the following steps:**
a) providing an apparatus (10) comprising a first electrically conductive structure (14) comprising at least two individual elements (16) which are electrically isolated from one another,
b) changing the first electrically conductive structure (14), by which a second electrically conductive structure (18) comprising at least two individual elements (16), which are electrically isolated from one another, is obtained,
c) placing the apparatus (10) on the capacitive surface sensor (24), wherein the second electrically conductive structure (18) is at least partially in operative contact (26) with the capacitive surface sensor (24),
d) performing a dynamic input (22) in the form of a movement of an input means (20) by a user on the second electrically conductive structure (18) while the second electrically conductive structure (18) is at least partially in operative contact (26) with the capacitive area sensor (24), so that a second time-dependent signal (30) is generated on the capacitive surface sensor (24), which is determined by a spatial arrangement, electrical conductivity, size, distance, and/or shape of the individual elements (16) of the second electrically conductive structure (18) on the apparatus (10).

12. The method according to claim 11
**additionally comprising the following steps** between steps a) and b)
a1) placing the apparatus (10) on the capacitive surface sensor (24), wherein the first electrically conductive structure (14) is at least partially in operative contact (26) with the capacitive surface sensor (24),
a2) performing a dynamic input (22) in the form of a movement of an input means (20) by a user on the first electrically conductive structure (14) while the first electrically conductive structure (14) is at least partially in operative contact (26) with the capacitive area sensor (24), so that a first time-dependent signal (28) is generated on the capacitive surface sensor (24), which is determined by a spatial arrangement, electrical conductivity, size, distance, and/or shape of the individual elements (16) of the first electrically conductive structure (18) on the apparatus (10).

13. The use of the device according to any one of claims 11 or 12
**characterized in that**
the change of the first electrically conductive structure (14) in step b) is effectuated by one or more of the following measures
a) applying electrically conductive material (40),
b) selectively removing part of the first electrically conductive structure (14),
c) applying a material that is configured to change properties, in particular the electrical conductivity, of the first electrically conductive structure (14).

## Revendications

1. Dispositif de génération d'un signal variable dépendant du temps dans un capteur capacitif de superficie (24), dans lequel le dispositif comprend un appareil (10) et le capteur capacitif de superficie (24), dans lequel l'appareil (10) comprend une première structure électriquement conductrice (14),
dans lequel la première structure électriquement conductrice (14) peut être convertie en une seconde structure électriquement conductrice (18) en modifiant la première structure électriquement conductrice (14),
**caractérisé en ce que**
la première structure électriquement conductrice (14) comprend au moins deux éléments individuels (16) séparés galvaniquement l'un de l'autre et est conçue pour, lorsqu'une entrée dynamique (22) est réalisée sous la forme d'un mouvement d'un moyen d'entrée (20) par un utilisateur sur la première structure électriquement conductrice (14), tandis que l'appareil est en contact actif avec le capteur capacitif de superficie, générer un premier signal dépendant du temps (28) sur le capteur capacitif de superficie (24), qui est déterminé par la disposition, la conductivité électrique, la taille, la distance et/ou la forme des éléments individuels (16) de la première structure électriquement conductrice (14) et
dans lequel la seconde structure électriquement conductrice (18) comprend au moins deux éléments individuels (16) séparés galvaniquement l'un de l'autre et est configurée pour, lorsqu'une entrée dynamique (22) est réalisée sous la forme d'un mouvement du moyen d'entrée (20) sur la seconde structure électriquement conductrice (18), tandis que l'appareil est en contact actif avec le capteur capacitif de superficie, générer un second signal dépendant du temps (30) sur le capteur capacitif de superficie (24), qui est déterminé par la disposition, la conductivité électrique, la taille, la distance et/ou la forme des éléments individuels (16) de la seconde structure électriquement conductrice (18).

2. Dispositif selon la revendication 1
**caractérisé en ce que**
le dispositif comprend un stylo qui est conçu pour effectuer des modifications dans la première structure électriquement conductrice (14), dans lequel le stylo est de préférence conçu pour appliquer un matériau électriquement conducteur (40), de manière davantage préférée sous la forme d'une encre électriquement conductrice, sur la première structure conductrice ou pour retirer sélectivement une partie de la première structure électriquement conductrice (14).

3. Dispositif selon l'une des revendications précédentes **caractérisé en ce que**
le dispositif est conçu de sorte que la modification de la première structure électriquement conductrice (14) peut être effectuée par une ou plusieurs des mesures suivantes
a) l'application d'un matériau électriquement conducteur (40),
b) le retrait sélectif d'une partie de la première structure électriquement conductrice (14),
c) l'application d'un matériau conçu pour modifier les propriétés, notamment la conductivité électrique, de la première structure électriquement conductrice (14).

4. Dispositif selon une ou plusieurs des revendications précédentes
**caractérisé en ce que**
une individualisation de l'appareil (10) peut être effectuée en modifiant la première structure électriquement conductrice (14) par une ou plusieurs des mesures suivantes :
a) l'application d'un matériau électriquement conducteur (40) avec un stylo à encre électriquement conductrice,
b) l'impression avec un matériau électriquement conducteur (40) à l'aide du procédé d'impression à jet d'encre.

5. Dispositif selon une ou plusieurs des revendications précédentes
**caractérisé en ce que**
le capteur capacitif de superficie (24) est un écran tactile.

6. Dispositif selon une ou plusieurs des revendications 1 à 5 **caractérisé en ce que**
la division ou la séparation de la première structure électriquement conductrice (14) peut être effectuée en
a) ouvrant un emballage ou déchirant une bande de contrôle ou
b) retirant une étiquette ou un marqueur qui se sépare ou se délamine en au moins deux parties lors du retrait.

7. Dispositif selon une ou plusieurs des revendications 3 ou 4 **caractérisé en ce que**
le matériau électriquement conducteur (40) comprend un matériau ayant une conductivité électrique variable dans le temps.

8. Dispositif selon une ou plusieurs des revendications 1 à 7 **caractérisé en ce que**
les éléments individuels (16) des structures électriquement conductrices (14, 18) sont dimensionnés en termes de taille, d'espacement et de forme de sorte qu'à tout moment pendant l'entrée dynamique (22) au moins deux éléments individuels (16) sont au moins partiellement en contact actif avec un moyen d'entrée (20), dans lequel l'entrée dynamique (22) est effectuée avec le moyen d'entrée (20).

9. Dispositif selon une ou plusieurs des revendications 1 à 8 **caractérisé en ce que**
l'entrée dynamique (22) peut être modulée en termes de position,
de vitesse, de direction, de forme, d'interruption du signal, de fréquence et/ou d'intensité du signal.

10. Dispositif selon une ou plusieurs des revendications 1 à 9 **caractérisé en ce que**
la première structure électriquement conductrice (14) et/ou la seconde structure électriquement conductrice (18) est présente sur un substrat électriquement non conducteur (12), dans lequel le substrat électriquement non conducteur (12) repose sur le capteur capacitif de superficie (24), tandis qu'un effleurement de la première structure électriquement conductrice (14) et/ou de la seconde structure électriquement conductrice (18) par le doigt d'un utilisateur en tant que moyen d'entrée est possible.

11. Procédé de génération d'un signal variable dépendant du temps sur un capteur de zone capacitif (24),
**comprenant les étapes suivantes :**
a) la fourniture d'un appareil (10) comprenant une première structure électriquement conductrice (14) comprenant au moins deux éléments individuels (16) séparés galvaniquement l'un de l'autre,
b) la modification de la première structure électriquement conductrice (14), de sorte qu'une seconde structure électriquement conductrice (18) comprenant au moins deux éléments individuels séparés galvaniquement (16) est obtenue,
c) le placement de l'appareil (10) sur le capteur capacitif de superficie (24), dans lequel la seconde structure électriquement conductrice (18) est au moins partiellement en contact actif (26) avec le capteur capacitif de superficie (24),
d) la réalisation de l'entrée dynamique (22) sous la forme d'un mouvement d'un moyen d'entrée (20) par un utilisateur sur la seconde structure électriquement conductrice (18) tandis que la seconde structure électriquement conductrice (18) est au moins partiellement en contact actif (26) avec le capteur capacitif de superficie (24), de sorte qu'un second signal dépendant du temps (30) est généré sur le capteur capacitif de superficie (24), qui est déterminé par une disposition spatiale, une conductivité électrique, une taille, une distance et/ou une forme des éléments individuels (16) de la seconde structure électriquement conductrice (18) sur l'appareil (10).

12. Procédé selon la revendication 11
**comprenant en outre les étapes suivantes** entre les étapes a) et b)
a1) le placement de l'appareil (10) sur le capteur capacitif de superficie (24), dans lequel la première structure électriquement conductrice (14) est au moins partiellement en contact actif (26) avec le capteur capacitif de superficie (24)
a2) la réalisation de l'entrée dynamique (22) sous la forme d'un mouvement d'un moyen d'entrée (20) par un utilisateur sur la première structure électriquement conductrice (14) tandis que la première structure électriquement conductrice (14) est au moins partiellement en contact actif (26) avec le capteur capacitif de superficie (24), de sorte qu'un premier signal dépendant du temps (28) est généré sur le capteur capacitif de superficie (24), qui est déterminé par une disposition spatiale, une conductivité électrique, une taille, une distance et/ou une forme des éléments individuels (16) de la première structure électriquement conductrice (18) sur l'appareil (10).

13. Procédé selon l'une des revendications 11 ou 12 **caractérisé en ce que**
la modification de la première structure électriquement conductrice (14) à l'étape b) est effectuée par une ou plusieurs des mesures suivantes
a) l'application d'un matériau électriquement conducteur (40),
b) le retrait sélectif d'une partie de la première structure électriquement conductrice (14),
c) l'application d'un matériau conçu pour modifier les propriétés, notamment la conductivité électrique, de la première structure électriquement conductrice (14).
